# EUROPEAN PATENT APPLICATION

(11) **EP 4 306 807 A1**
(43) Date of publication of application: **17.01.2024**
(21) Application number: 22766410.9
(22) Date of filing: 14.03.2022
(51) Int. Cl.: F04D 29/32, E01H 1/08

(54) **GARDEN TOOL HAVING BLOWING FUNCTION**

(30) Priority: 12.03.2021 CN 202110268034
(71) Applicant: Positec Power Tools (Suzhou) Co., Ltd., Suzhou, Jiangsu 215123 (CN)
(72) Inventor: LIU, Zhengwei, Suzhou, Jiangsu 215123 (CN); XIE, Wenhui, Suzhou, Jiangsu 215123 (CN); LI, Chengzhong, Suzhou, Jiangsu 215123 (CN); YU, Xuefeng, Suzhou, Jiangsu 215123 (CN); DUAN, Fengwei, Suzhou, Jiangsu 215123 (CN); JIAO, Shiping, Suzhou, Jiangsu 215123 (CN)
(74) Representative: Korenberg, Alexander Tal
(86) International application number: PCT/CN2022/080647
(87) International publication number: WO 2022/188888

(57) **Abstract**

The application relates to a garden tool with a blowing function. In operation, a motor drives a fan to rotate around the axis of the fan, so that air is blown out from a blowing tube. Moreover, for different working conditions, the garden tool of the application has the performance of implementing different noise reduction effects. When the blowing force of the garden tool is greater than or equal to 16 N and less than or equal to 23 N, that is, when the garden tool is applied to a medium-load working condition, noise generated by the garden tool is controlled as: 53 dBA≤LP<57 dBA; when the blowing force of the garden tool is greater than 23 N and less than or equal to 40 N, that is, when the garden tool is applied to a heavy-load working condition, noise generated by the garden tool is controlled as: 53 dBA≤LP≤0.0121 F²-0.0603 F+53.065 dBA. Thus, according to the garden tool of the application, noise in operation is effectively reduced while the blowing performance is ensured.

## Description

### CROSS-REFERENCE TO RELATED APPLICATION

This application claims the priority to:
Chinese Patent Application No. 202110268034.9, filed on March 12, 2021 and entitled "ELECTRIC TOOL WITH BLOWING FUNCTION".

The entire contents of the above patent are incorporated herein by reference.

### BACKGROUND

### Technical Field

The present disclosure relates to the technical field of garden tools, and more specifically, relates to a garden tool with a blowing function.

### Related Art

With the continuous expansion of urban green areas, green belts in public places such as parks and roads have spread across the country, and garden tools with a blowing function have been widely applied. For example, a garden blower is a common type of garden tool with a blowing function, which utilizes airflow blown to the ground to remove dust or debris to facilitate cleaning. In order to generate higher air pressure and air speed to satisfy cleaning requirements, the garden blower is required to operate at higher power to produce desired wind power, which is likely to produce noise as a result.

However, the quality of the structural design of the garden tools directly determines the level of noise during operation. For example, in the existing garden tools, due to structure cooperation defects between fans, high levels of noise may be generated when the airflow passes through gaps between the fans.

In the existing garden tools, stationary vanes with certain rectifying effects on the airflow are often structurally designed with a forward tilt towards an air inlet side, causing the noise of the airflow still to be high.

In the existing garden tools, in order to optimize the air inlet effect, an air intake shield is arranged at the air inlet side. However, the noise reduction effect is not significant due to design defects of a grid structure on the air intake shield.

### SUMMARY

On that basis, it is necessary to provide a garden tool with a blowing function, which can effectively reduce noise during operation while ensuring blowing performance.

A garden tool with a blowing function includes: a housing; a blowing tube, connected with the housing and air may be blown out from the blowing tube; a fan, rotating around a fan axis for making air flow; and a motor, configured for driving the fan to rotate around the fan axis. When the motor operates at a maximum rotational speed, blowing force F and noise LP of the garden tool with a blowing function satisfy the following relationships: 16 N≤F≤23 N, and 53 dBA≤LP<57 dBA; or, 23 N<F≤40 N, and 53 dBA≤LP≤0.0121F²-0.0603F+53.065 dBA.

In one of embodiments, the rotational speed of the motor is 16000 r/min to 26000 r/min.

In one of embodiments, the rotational speed of the motor is 18000 r/min to 22000 r/min.

In one of embodiments, a diameter of a projection profile of the fan in a plane perpendicular to the fan axis is 88 mm to 120 mm.

In one of embodiments, when the motor operates at the maximum rotational speed, the blowing force F and the noise LP of the garden tool with a blowing function further satisfy following relationships:
23 N<F≤40 N, and 53 dBA≤LP≤0.0081F²+0.1374F+48.473 dBA.

In one of embodiments, an air volume Q, pressure Pₚᵣₑₛₛᵤᵣₑ, and input power P_{power} of the motor of the garden tool with a blowing function respectively satisfy following relationships:
450 cfm≤Q≤1500 cfm, 1400 Pa≤Pₚᵣₑₛₛᵤᵣₑ≤5000 Pa, and 700 W≤P_{power} ≤3000 W.

In one of embodiments, the garden tool is a blower for blowing leaves on the ground. The housing is provided with an air inlet. The blower includes an air intake shield connected to the air inlet. The fan is configured to rotat around the fan axis and introduce external air through the air intake shield. The fan includes: a hub; and a plurality of fan blades extending outwards from the hub in a radial direction and distributed around the fan axis. The fan blade includes a pressure surface configured for generating airflow, and a suction surface. The pressure surface and the suction surface intersect in the direction of the fan axis to form a front edge and a rear edge, and the front edge is located in front of the rear edge in a rotating direction of the fan.

In the direction of the fan axis, a minimum distance between the front edge of the fan blade of the fan and the air intake shield is D5, and a length of the garden tool is L0; wherein 0.15≤D5:L0≤0.4.

In one of embodiments, the blower further includes a duct connected with the housing. The duct includes an outer guide cover, an inner guide cover, and first stationary vanes connected between the outer guide cover and the inner guide cover, and the motor is accommodated in the inner guide cover. A ratio of a cross sectional area S1 of the air inlet to a cross sectional area S2 of the outer guide cover is 1.6 to 4.

According to the above garden tool with a blowing function, the motor drives the fan to rotate around its axis, such that the air is blown out from the blowing tube. The garden tool in one of embodiments shows different noise reduction effects under different working conditions. When the blowing force of the garden tool is greater than or equal to 16 N and less than or equal to 23 N, in other words, the garden tool is applied to medium working conditions, the generated noise is controlled at 53 dBA≤LP<57 dBA; and when the blowing force of the garden tool is greater than 23 N and less than or equal to 40 N, in other words, the garden tool is applied to heavy working conditions, the generated noise is controlled at 53 dBA≤LP≤0.0121F²-0.0603F+53.065 dBA. Accordingly, the garden tool in one of embodiments effectively reduces the noise during operation while ensuring the blowing performance.

One of embodiments provides a garden tool with a blowing function, which includes: a housing; a blowing tube, connected with the housing, and air may be blown out from the blowing tube; a fan, rotating around a fan axis for making air flow, the fan includes: a hub and a plurality of fan blades extending outwards from the hub in a radial direction and distributed around the fan axis.; and a motor, configured for driving the fan to rotate around the fan axis. Wherein the fan blade includes a pressure surface configured for generating airflow, and a suction surface; the pressure surface and the suction surface intersect in the direction of the fan axis to form a front edge and a rear edge; in a rotating direction of the fan, the front edge is located in front of the rear edge, and projections of the adjacent front edges and rear edges of two adjacent fan blades do not overlap in a plane perpendicular to the fan axis; and an interval gap is provided between projections of the two adjacent fan blades in the plane perpendicular to the fan axis, and the interval gap D0 is greater than 0 mm and less than or equal to 4 mm.

In one of embodiments, the interval gap D0 is greater than or equal to 2 mm and less than or equal to 3.5 mm.

In one of embodiments, the fan axis is defined as an X-axis, a line passing through one end point of the front edge close to the hub and perpendicular to and intersected with the fan axis is defined as a Y-axis, and a line perpendicular to and intersected with the X-axis and the Y-axis is defined as a Z-axis. A maximum distance between projections of the suction surface and the pressure surface in a plane formed by the X-axis and the Z-axis is defined as a maximum thickness h of the fan blade.

A ratio of a value of the interval gap D0 to a value of the maximum thickness h of the fan blade ranges from 1 to 1.5.

In one of embodiments, the number of the fan blades is 7 to 23.

In one of embodiments, the fan blades are formed on the hub through injection molding or die casting.

In one of embodiments, a ratio of a diameter D2 of the hub to a diameter D1 of projection profiles of all the fan blades in a plane perpendicular to the fan axis is 0.4 to 0.6.

One of embodiments provides a garden tool with a blowing function, which includes: a housing; a blowing tube, connected with the housing and provided with an air outlet for air to be blown out; a fan, rotating around a fan axis and configured for making air flow and blow the air out from the air outlet; and a motor, configured for driving the fan to rotate around the fan axis.

The fan includes: a hub and a plurality of fan blades extending outwards from the hub in a radial direction and distributed around the fan axis. The fan blade includes a root portion fixed to the hub, a top edge spaced from the hub, and a front edge and a rear edge extending between the root portion and the top edge, and in a rotating direction of the fan, the front edge is located in front of the rear edge.

The fan axis is defined as an X-axis, a line passing through the end point of the front edge close to the hub and perpendicular to and intersected with the fan axis is defined as a Y-axis, and a line perpendicular to and intersected with the X-axis and the Y-axis is defined as a Z-axis.

Midpoints of projections of the root portion and the top edge in a plane formed by the X-axis and the Y-axis are correspondingly defined as a first midpoint and a second midpoint; a line passing through the first midpoint and parallel to the Y-axis is defined as a first vertical axis, and in an airflow flowing direction, the second midpoint is located on a downstream side of the first vertical axis facing the air outlet of the blowing tube.

In one of embodiments, an included angle β between a line connecting the first midpoint and the second midpoint and the first vertical axis is 0° to 9°.

In one of embodiments, a projection of the front edge in a plane formed by the Y-axis and the Z-axis is defined as a front side projection, and a line connecting two opposite end points of the front side projection is defined as a chord line L.

At least two positions of the front side projection are respectively located on two opposite sides of the chord line L.

In one of embodiments, the front side projection at an outer profile of a part of the front edge away from the hub deviates from the chord line L, and the part of the front edge away from the hub is concave away from one side of the blowing tube with the air outlet.

The front side projection at an outer profile of a part of the front edge close to the hub deviates from the chord line L, and the part of the front edge close to the hub is convex towards the side of the blowing tube with the air outlet.

In one of embodiments, the projection of the front edge in a plane formed by the Y-axis and the Z-axis is defined as the front side projection. The front side projection bends and extends at the outer profile of a part of the front edge away from the hub, such that a concave structure is formed on the front side projection, and an opening orientation of the concave structure and the rotating direction of the fan are kept consistent.

In one of embodiments, a bending angle α between a tangent line, at an intersection that is point of the outer profiles of the front edge and the top edge and that is away from the hub, of the front side projection, and the chord line L is 5° to 15°.

In one of embodiments, the projection of the front edge in the plane formed by the X-axis and the Y-axis is located on one side of the Y-axis towards the air outlet of the blowing tube.

In one of embodiments, an included angle θ between the Y-axis and a tangent line, at the end point of the front edge close to the hub, of the projection of the front edge in the plane formed by the X-axis and the Y-axis is 3° to 25°.

In one of embodiments, a line passing through one end point of the rear edge close to the hub and perpendicular to the X-axis is defined as a second vertical axis.

The projection of the rear edge in the plane formed by the X-axis and the Y-axis is located on one side of the second vertical axis facing away from the air outlet of the blowing tube.

In one of embodiments, an included angle δ between a tangent line, at an intersection point of the rear edge and the hub, of the projection of the rear edge in the plane formed by the X-axis and the Y-axis, and the second vertical axis is 8° to 20°.

In one of embodiments, the fan is sectioned by a plane perpendicular to the Y-axis, a line connecting intersection points between the section and the front edge and the rear edge is defined as an installation line, and an installation included angle γ between the installation line and the X-axis is gradually increased from the root portion to the top edge.

In one of embodiments, the installation included angle γ between the installation line and the X-axis is 5° to 30° at the root portion.

In one of embodiments, the included angle γ between the installation line on the top edge and the X-axis is 30° to 85° at the top edge.

In one of embodiments, the fan blade further includes a curved surface transition portion located at a junction of the rear edge and the top edge and approaching the hub from the top edge, and an arc surface of the curved surface transition portion is convex away from the hub.

In one of embodiments, a corner radius of a projection of the curved surface transition portion in the plane formed by the X-axis and the Y-axis is 1 mm to 5 mm.

In one of embodiments, an included angle η between the Y-axis and a tangent line, at one end point of the curved surface transition portion close to the top edge, of the projection of the curved surface transition portion in the plane formed by the X-axis and the Y-axis is 0° to 45°.

In one of embodiments, a duct connected with the housing is further included. The duct includes an outer guide cover, an inner guide cover, and first stationary vanes connected between the outer guide cover and the inner guide cover. A gap D3 between projections of the fan blade and the first stationary vane in the plane formed by the X-axis and the Y-axis is gradually enlarged from the root portion to the top edge.

One of embodiments provides a garden tool with a blowing function, which includes: a housing; a blowing tube, connected with the housing and provided with an air outlet for air to be blown out; a duct, connected to the housing and configured for guiding the air to flow; a fan, rotating around a fan axis to make the air flow; and a motor, configured for driving the fan to rotate around the fan axis. The duct includes an outer guide cover, an inner guide cover, and first stationary vanes connected between the outer guide cover and the inner guide cover.

The first stationary vane includes a bottom connected to the inner guide cover, a top connected to the outer guide cover, and a first front side edge and a first rear side edge located in an airflow flowing direction in a spaced manner.

The fan axis is defined as an X-axis, and a plane passing through any point on the fan and perpendicular to the X-axis is defined as a reference plane.

A distance between one end point of the first front side edge close to the bottom and the reference plane is less than a distance between one end point of the first front side edge close to the top and the reference plane.

In one of embodiments, the fan includes: a hub and a plurality of fan blades extending outwards from the hub in a radial direction and distributed around the fan axis. The fan blade includes a root portion fixed to the hub, a top edge spaced from the hub, and a front edge and a rear edge extending between the root portion and the top edge, and in a rotating direction of the fan, the front edge is located in front of the rear edge.

A distance between the end point of the first front side edge close to the bottom and one end point of the rear edge close to the root portion is less than a distance between the end point of the first front side edge close to the top and one end point of the rear edge close to the top edge.

In one of embodiments, a distance between one end point of the first rear side edge close to the bottom and the reference plane is less than a distance between one end point of the first rear side edge close to the top and the reference plane.

In one of embodiments, the fan includes: a hub and a plurality of fan blades extending outwards from the hub in a radial direction and distributed around the fan axis. The fan blade includes a root portion fixed to the hub, a top edge spaced from the hub, and a front edge and a rear edge extending between the root portion and the top edge, and in a rotating direction of the fan, the front edge is located in front of the rear edge.

A distance between the end point of the first rear side edge close to the bottom and one end point of the rear edge close to the root portion is less than a distance between the end point of the first rear side edge close to the top and one end point of the rear edge close to the top edge.

In one of embodiments, an axis of the inner guide cover is defined as an X'-axis, a line passing through the end point of the first front side edge close to the bottom and perpendicular to and intersected with the X'-axis is defined as a Y'-axis, and a line perpendicular to and intersected with the X'-axis and the Y'-axis is defined as a Z'-axis.

A part, close to the fan, of a stationary vane section obtained by sectioning the first stationary vane by a surface parallel to a plane formed by the X'-axis and the Z'-axis, crosses the X'-axis, and bends and extends in a circumferential direction of the inner guide cover.

In one of embodiments, a maximum height, in the direction of the Z'-axis, of the stationary vane section obtained by sectioning the first stationary vane by the surface parallel to the plane formed by the X'-axis and the Z'-axis is defined as a bending distance D4 of the first stationary vane.

The bending distance D4 of the first stationary vane is gradually increased from the bottom to the top.

In one of embodiments, the bending distance D4 of the first stationary vane is 1 mm to 15 mm.

In one of embodiments, the first stationary vane has a windward side and a leeward side opposite to the windward side. Outer profiles of projections of the windward side and the leeward side in the plane formed by the X'-axis and the Z'-axis intersect, and an included angle between a tangent line at an intersection point close to the fan and the X'-axis is defined as a first stationary vane inlet angle Le, where the first stationary vane inlet angle Le is 35° to 65°.

In one of embodiments, the stationary vane section includes a first part extending along the X'-axis, and a second part crossing the X'-axis, and bending and extending in the circumferential direction of the inner guide cover. The second part includes a concave line and a convex line which are oppositely arranged, a maximum distance between a line connecting two ends of the concave line and the convex line is defined as a concave chord height H, and the concave chord height H is 2 mm to 6 mm.

In one of embodiments, the projection of the first front side edge in the plane formed by the X'-axis and the Y'-axis is located on one side of the Y-axis towards the air outlet of the blowing tube.

In one of embodiments, an included angle ε between a tangent line at a position, close to the bottom, of the projection of the first front side edge in the plane formed by the X'-axis and the Y'-axis, and the X'-axis is 60° to 90°.

In one of embodiments, the projection of the first rear side edge in the plane formed by the X'-axis and the Y'-axis is an arc concave towards the first front side edge.

In one of embodiments, an included angle b between a tangent line at a position, close to the bottom, of the projection of the first rear side edge in the plane formed by the X'-axis and the Y'-axis, and the X'-axis is 45° to 90°.

In one of embodiments, an included angle c between a tangent line at a position, close to the top, of the projection of the first rear side edge in the plane formed by the X'-axis and the Y'-axis, and the X'-axis is smaller than the included angle b.

In one of embodiments, the bottom of the first stationary vane is inclined at a first angle relative to the fan axis; and the top of the first stationary vane is inclined at a second angle relative to the fan axis.

In one of embodiments, the first stationary vanes are distributed around the inner guide cover at equal intervals, and airflow generated by the fan can pass through gaps between the first stationary vanes; and the number of the first stationary vanes is 3 to 11.

In one of embodiments, a length of the first stationary vane is L1, a mid-arc line chord length of the fan blade of the fan is L2, and 3≤L1:L2≤9.

The length of the first stationary vane is defined as a distance between the first front side edge of the first stationary vane and the first rear side edge of the first stationary vane in the airflow flowing direction.

One of embodiments provides a garden tool with a blowing function, which includes: a housing; a blowing tube, connected with the housing, and air may be blown out from the blowing tube; a duct, connected to the housing and configured for guiding the air to flow; a fan, rotating around a fan axis to make the air flow; and a motor, configured for driving the fan to rotate around the fan axis. The duct includes an outer guide cover, an inner guide cover, and first stationary vanes connected between the outer guide cover and the inner guide cover. The garden tool further includes a guide cone connected to the inner guide cover, and second stationary vanes arranged on the guide cone.

The second stationary vanes are located downstream of the first stationary vanes in the airflow flowing direction.

In one of embodiments, the second stationary vane includes a first inner side edge connected to the guide cone, a first outer side edge opposite to the first inner side edge and connected with the first inner side edge, and an intersection point located at a joint of the first inner side edge and the first outer side edge. The first outer side edge is in an arc shape convex outwards in the radial direction.

In one of embodiments, a width W of the second stationary vane is linearly reduced from the first inner side edge to the first outer side edge.

In one of embodiments, the second stationary vane includes two tail end parts respectively adjacent to the corresponding intersection points, and a middle part located between the two tail end parts. A width of the middle part at the same cross section is kept unchanged, and a width of the tail end parts at the same cross section is gradually increased from the intersection points to the middle part.

In one of embodiments, the second stationary vanes are arranged around the guide cone at equal intervals, and airflow flowing through the first stationary vanes can pass through gaps between the second stationary vanes; and the number of the second stationary vanes is 3 to 7.

In one of embodiments, a length of the second stationary vane is L3, a chord length of the first stationary vane is L4, and 0.2≤ L3:L4≤1.

The length of the second stationary vane is defined as the size of the second stationary vane in the airflow flowing direction.

In one of embodiments, an inlet installation angle of the second stationary vane is d, and 0°≤d≤15°.

The inlet installation angle of the second stationary vane is defined as an included angle between a tangent line at a mid-arc surface of the second stationary vane and the fan axis of the fan.

In one of embodiments, the garden tool further includes third stationary vanes located downstream of the second stationary vanes in the airflow flowing direction. The third stationary vanes are in a flat plate shape, roughly extend in the direction of the fan axis, and are arranged at equal intervals in the circumferential direction.

In one of embodiments, the number of the third stationary vanes is 3 to 11.

In one of embodiments, a distance between the third stationary vane and the first stationary vane is L5, the chord length of the first stationary vane is L4, and 2≤L5:L4≤4.

In one of embodiments, a length of the third stationary vane is L6, the chord length of the first stationary vane is L4, and 0.5≤ L6:L4≤2. The length of the third stationary vane is defined as the size of the third stationary vane in the direction of the fan axis.

In one of embodiments, an inlet installation angle of the third stationary vane is e, and 0°≤e≤15°.

In one of embodiments, the third stationary vane includes a second front side edge, a second rear side edge, a second inner side edge close to the housing, and a second outer side edge opposite to the second inner side edge.

The second outer side edge expands and obliquely extends relative to the fan axis in the airflow flowing direction, and the second front side edge concavely bends and extends relative to the fan axis, and is in smooth transition with the second outer side edge.

One of embodiments further provides a garden tool with a blowing function, which includes: a housing; a blowing tube, connected with the housing, and air may be blown out from the blowing tube; a duct, connected to the housing and configured for guiding the air to flow; a fan, rotating around a fan axis to make the air flow; and a motor, configured for driving the fan to rotate around the fan axis. The duct includes an outer guide cover, an inner guide cover, and first stationary vanes located between the outer guide cover and the inner guide cover. The garden tool further includes third stationary vanes located downstream of the first stationary vanes in the airflow direction.

In one of embodiments, the third stationary vanes are arranged in a connected region of the housing and the blowing tube.

In one of embodiments, the third stationary vanes are in a flat plate shape, roughly extend in the direction of the fan axis, and are arranged at equal intervals in the circumferential direction.

In one of embodiments, the duct further includes a guide cone connected to the inner guide cover, and second stationary vanes arranged on the guide cone.

The second stationary vanes are located between the first stationary vanes and the third stationary vanes in the airflow flowing direction.

One of embodiments provides a garden tool with a blowing function, which includes: a housing, provided with an air inlet; a fan, rotating around a fan axis for making air flow; a motor, configured for driving the fan to rotate around the fan axis; and an air intake shield, connected to the air inlet. The fan is configured to rotate around the fan axis and introduce, by the air intake shield, external air from the air inlet. The air intake shield includes a three-dimensional air inlet array grid with an outward convex outer envelope surface. The three-dimensional air inlet array grid includes:
a web extending in a first direction, wherein there are a plurality of webs, and the plurality of webs are arranged in a second direction at intervals; and
a flow-breaking rib extending in the second direction, wherein there are a plurality of flow-breaking ribs; each flow-breaking rib is in lap joint to two adjacent webs in the second direction; a plurality of grid units arranged at intervals are defined by the plurality of flow-breaking ribs and the plurality of webs; and air inlet holes for airflow to penetrate through are formed between adjacent grid units. Ejection portions of the plurality of flow-breaking ribs protrude relative to the webs in a direction away from the air inlet to form the outward convex outer envelope surface of the three-dimensional air inlet array grid, where the first direction intersects with the second direction.

In one of embodiments, the plurality of grid units are arranged into a plurality of rows at intervals in the second direction, and the grid units in each row are arranged in the first direction.

The two most adjacent grid units in adjacent rows are staggered in the first direction.

In one of embodiments, two adjacent flow-breaking ribs in adjacent rows are staggered at equal intervals in the first direction.

In one of embodiments, the three-dimensional air inlet array grid has a main air inlet region and auxiliary air inlet regions surrounding the main air inlet region; and projections of the grid units located in the main air inlet region in the plane perpendicular to the axis of the air inlet are the same in shape.

In one of embodiments, the flow-breaking rib includes a first air guide portion and a second air guide portion, wherein the first air guide portion and the second air guide portion extend towards the adjacent spaced webs from the ejection portion. The flow-breaking rib has a windward side and a leeward side opposite to the windward side.

A preset distance D6 of the leeward side of the ejection portion protruding outward relative to the web is 2 mm to 20 mm.

In one of embodiments, the ejection portion has a top surface on the windward side, and the first air guide portion and the second air guide portion are respectively a first air guide surface and a second air guide surface on the windward side.

A width of the top surface is respectively smaller than a width of the first air guide surface and the second air guide surface.

In one of embodiments, the width of the first air guide surface and the second air guide surface is gradually increased from their joints with the top surface to the web direction.

In one of embodiments, the top surface is perpendicular to the axis of the air inlet.

Included angles between projections of the first air guide surface and the second air guide surface in the plane perpendicular to the first direction and a projection of the top surface in the plane perpendicular to the first direction are both De, where 90°≤De≤180°.

In one of embodiments, the windward side further includes third air guide surfaces located on two opposite sides of the flow-breaking rib in the first direction.

The third air guide surfaces are connected to the top surface, the first air guide surface, and the second air guide surface, and obliquely extend outwards in the first direction.

In one of embodiments, an included angle between the first air guide surfaces on two opposite sides of the top surface is 10° to 60°.

In one of embodiments, a distance between two adjacent webs is 5 mm to 15 mm.

In one of embodiments, one side surface of the web facing away from intake air in the first direction at least includes a first surface and a second surface intersected with each other, and an included angle between the first surface and the second surface is 140° to 180°.

In one of embodiments, the air intake shield further includes a frame connected to the air inlet, and the frame surrounds outside the three-dimensional air inlet array grid.

In one of embodiments, the outer envelope surface of the three-dimensional air inlet array grid protrudes out of one end surface of the frame facing away from the air inlet.

In one of embodiments, the air intake shield has a shield axis, and one end surface of the frame facing away from the air inlet inclines relative to the shield axis.

One of embodiments provides a garden tool with a blowing function, which includes: a housing, provided with an air inlet; a fan, rotating around a fan axis to make air flow; a motor, configured for driving the fan to rotate around the fan axis; and an air intake shield, connected to the air inlet. The fan can rotate around the fan axis and introduce, by the air intake shield, external air from the air inlet.

The garden tool further includes a plurality of guide vanes arranged at an upstream region of the fan, and the airflow introduced from the air inlet may pass through gaps between the guide vanes, so as to be guided into parallel airflow.

In one of embodiments, the plurality of guide vanes are arranged in parallel at equal intervals.

In one of embodiments, a distance between two adjacent guide vanes is 12 mm to 18 mm.

In one of embodiments, a distance between the guide vanes and the air inlet is 10 mm to 50 mm

In one of embodiments, a chord length of each guide vane is 10 mm to 50 mm.

In one of embodiments, the housing has an airflow channel communicated with the air inlet.

The housing includes a straight section roughly parallel to the fan axis, and a bending section located upstream of the straight section and downwards bending relative to the straight section.

The guide vanes are arranged at the bending section and extend along an inner wall of the bending section.

In one of embodiments, an included angle between the fan axis and a vertical line perpendicular to a plane where the air inlet is located is 120° to 180°.

In one of embodiments, the housing includes a first half housing and a second half housing which are symmetrically arranged relative to a symmetric reference plane. The fan axis is located on the symmetric reference plane, and the first half housing and the second half housing are provided with matched upper edges and lower edges. Projections of parts, located on the bending section, of the upper edge of the first half housing and the upper edge of the second half housing, towards the symmetric reference plane are overlapped and have a third curved profile.

Projections of parts, located on the bending section, of the lower edge of the first half housing and the lower edge of the second half housing towards the symmetric reference plane are overlapped and have a fourth curved profile.

In one of embodiments, both the third curved profile and the fourth curved profile are in an arc shape.

The third curved profile and the fourth curved profile are located on concentric circles with different radiuses.

In one of embodiments, the guide vane includes a first sub-guide vane and a second sub-guide vane symmetrically arranged relative to the symmetric reference plane.

The first sub-guide vane and the second sub-guide vane are coupled to form the complete guide vane.

In one of embodiments, projections of the guide vanes towards the symmetric reference plane have a fifth curved profile; and the fifth curved profile is of an arc shape.

Mid-arc lines equally dividing the third curved profile and the fourth curved profile are perpendicular to and equally divide the fifth curved profile.

### BRIEF DESCRIPTION OF THE DRAWINGS

The drawings constituting a part of this application are used for providing a further understanding of the present disclosure. The exemplary embodiments of the present disclosure and descriptions thereof are used for explaining the present disclosure, and do not constitute improper limitations on the present disclosure.

In order to describe the technical solutions in the embodiments of the present disclosure more clearly, the accompanying drawings required for describing the embodiments are briefly introduced below. Apparently, the accompanying drawings in the following description show some embodiments of the present disclosure, and a person of ordinary skill in the art may still derive other drawings from these accompanying drawings without creative efforts.
FIG. 1 is a structural section view of a garden tool with a blowing function according to one of embodiments;
FIG. 2 illustrates two different noise curve graphs in one of embodiments;
FIG. 3 is a schematic structural diagram of a fan of a garden tool with a blowing function shown in FIG. 2;
FIG. 4 is a schematic structural diagram of the fan from another perspective in FIG. 3;
FIG. 5 is a schematic structural diagram of the fan from still another perspective in FIG. 3;
FIG. 6 is a first schematic structural diagram of a projection of the fan shown in FIG. 5 in a plane formed by a Y-axis and a Z-axis;
FIG. 7 is a schematic enlarged diagram of a structure at a circle C in the fan shown in FIG. 6;
FIG. 8 is a schematic enlarged diagram of a structure at a circle T in the fan shown in FIG. 6;
FIG. 9 is a graph of sine curves corresponding to different chord heights according to one of embodiments;
FIG. 10 is a first schematic structural diagram of a projection of a fan in a plane formed by an X-axis and a Y-axis according to one of embodiments;
FIG. 11 is a second schematic structural diagram of a projection of a fan in a plane formed by an X-axis and a Y-axis according to one of embodiments;
FIG. 12 is a schematic enlarged diagram of a structure at a circle D in the fan shown in FIG. 11;
FIG. 13 is a second schematic structural diagram of a projection of the fan shown in FIG. 5 in a plane formed by a Y-axis and a Z-axis;
FIG. 14 illustrates schematic cross-section diagrams of the fan shown in FIG. 13 in different directions;
FIG. 15 is a comparison diagram of noise spectra between a fan with 17 fan blades according to an embodiment of this application and a fan with 17 fan blades in the prior art;
FIG. 16 is a schematic structural diagram of a duct of the garden tool with a blowing function shown in FIG. 1;
FIG. 17 is a schematic cross-section diagram in a radial direction of FIG. 16;
FIG. 18 is a diagram of projections of a matched structure of a fan and first stationary vanes shown in FIG. 1 in a plane formed by an X'-axis and a Y'-axis;
FIG. 19 is a schematic cross-section diagram of the matched structure of the fan and the first stationary vanes shown in FIG. 1 in different directions;
FIG. 20 is a schematic assembly diagram of a guide cone and second stationary vanes of the garden tool with a blowing function shown in FIG. 1;
FIG. 21 is a schematic assembly diagram of the guide cone and the second stationary vanes from another perspective in FIG. 20;
FIG. 22 is a partial enlarged view of a position B in FIG. 20;
FIG. 23 is a schematic assembly diagram of a connecting cylinder and third stationary vanes of the garden tool with a blowing function in FIG. 1;
FIG. 24 is a schematic assembly diagram of the connecting cylinder and the third stationary vanes from another perspective in FIG. 23;
FIG. 25 is a schematic cross-section diagram in a radial direction of FIG. 24;
FIG. 26 is a first schematic structural diagram of an air intake shield of the garden tool with a blowing function shown in FIG. 1;
FIG. 27 is a structural section view of the air intake shield shown in FIG. 26 in a C1-C1 direction;
FIG. 28 is a structural section view of the air intake shield shown in FIG. 26 in a C2-C2 direction;
FIG. 29 is a structural section view of the air intake shield shown in FIG. 26 in a C3-C3 direction;
FIG. 30 is a second schematic structural diagram of the air intake shield of the garden tool with a blowing function shown in FIG. 1;
FIG. 31 is a schematic structural diagram of flow-breaking ribs of the air intake shield shown in FIG. 15; and
FIG. 32 is a schematic cross-section diagram of an assembly structure of guide vanes and a first half housing or a second half housing of the garden tool with a blowing function shown in FIG. 1.

### DETAILED DESCRIPTION

To make the above objectives, features, and advantages of the present disclosure more apparent and understandable, specific implementations of the present disclosure will be described in detail below in conjunction with the accompanying drawings. Many specific details are described below to facilitate a thorough understanding of the present disclosure. However, the present disclosure can be implemented in many other ways different from those described herein. Those skilled in the art may make similar improvements without departing from the intention of the present disclosure. Therefore, the present disclosure is not limited to the specific embodiments disclosed below.

An electric tool with a blowing function in the related prior art specifically may be a garden tool 100, such as a garden blower, which typically includes a housing 10, a duct 30, a fan 50 for generating airflow, a motor configured for driving the fan 50, and a blowing tube 20 adaptively connected to the housing 10. In this implementation, the motor and the fan 50 are both arranged in the duct 30; the duct 30 is arranged in the housing 10; and the blowing tube 20 is connected with the housing 10 to form an airflow channel with the housing 10. The blowing tube 20 is provided with an air outlet 22; the housing 10 is further provided with an air inlet 11; the air inlet 11 and duct 30 are configured for guiding airflow generated by the fan 50 to move towards the air outlet 22 of the blowing tube 20; and the air enters the housing 10 from the air inlet 11 and flows through the airflow channel to the air outlet 22 to be blown out. Of course, the duct may also be connected between the housing 10 and the blowing tube 20.

The high working performance and low noise of the above garden blower are contradictory to each other. Specifically, the cleaning conditions that the garden blower encounters mainly include: fallen leaves and small debris on outdoor or park grounds, debris between pavement brick joints, and wet leaves adhering to the ground. The inventors found through researches that in order to satisfy the cleaning requirements for the above working conditions, the garden blower usually needs to provide a sufficiently large air volume and air speed. However, for example, the motor and the fan 50 are downsized, the rotational speed of the motor is required to be increased so as to ensure the air volume and the air speed, and as a result, noise produced when the airflow impacts fan blades 54 and generates vortex is increased; and meanwhile, the size of the duct 30 is reduced, which may also increase the noise caused when the airflow impacts an internal structure of the duct 30 and generates vortex. In addition, when the airflow separates from the vortex, high-decibel noise, and even high-pitched noise are likely to be produced.

Thus, the trade-off between high working performance and low noise has always been a challenge and constraint for manufacturers. In one of embodiments, improvements are made on structures such as an air intake shield, the fan, and stationary vanes in the duct 30, which avoid the generation of the vortex when the airflow impacts the internal structure of the duct 30, so as to achieve downsizing and low noise while the blowing performance is kept basically unchanged.

One of embodiments illustrates, by taking the garden blower as an example, the structure of the garden tool 100 with a blowing function in this application. Specifically, the garden tool 100 may be a handheld garden blower. This embodiment is provided only as an illustrative example and does not limit the scope of the technology of one of embodiments.

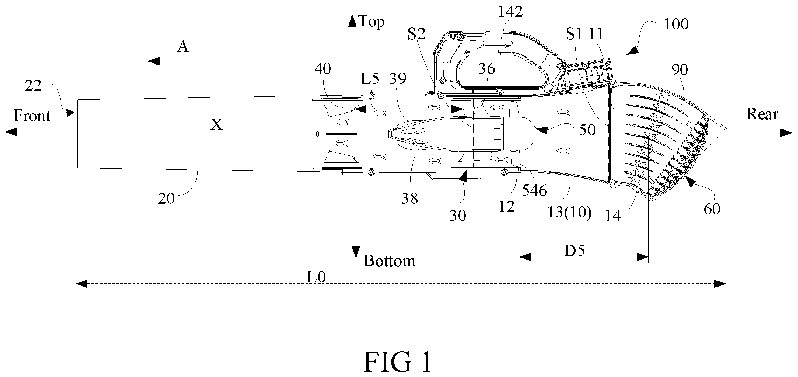

In some embodiments, referring to FIG. 1, a garden tool 100 with a blowing function includes: a housing 10, a blowing tube 20, a fan 50, and a motor. The blowing tube 20 is connected with the housing 10, and air may be blown out from the blowing tube 20. The fan 50 rotates around a fan axis 51 to make the air flow. The motor drives the fan 50 to rotate around the fan axis 51. A blowing force F and noise LP of the garden tool 100 with a blowing function satisfy the following relationships: 16 N≤F≤23 N and 53 dBA≤LP<57 dBA; or, 23 N<F≤40 N and 53 dBA≤LP≤0.0121F²-0.0603F+53.065 dBA.

According to the above garden tool 100 with a blowing function, the motor drives the fan 50 to rotate around its axis, such that the air is blown out from the blowing tube 20. The garden tool 100 in one of embodiments shows different noise reduction effects under different working conditions. When the blowing force of the garden tool 100 is greater than or equal to 16 N and less than or equal to 23 N, in other words, the garden tool 100 is usually applied to medium working conditions, the generated noise can be controlled at 53 dBA≤LP<57 dBA; and when the blowing force of the garden tool 100 is greater than 23 N and less than or equal to 40 N, in other words, the garden tool 100 is usually applied to heavy working conditions, the generated noise can be controlled at 53 dBA≤LP≤0.0121F²-0.0603F+53.065 dBA. Accordingly, the garden tool 100 in one of embodiments effectively reduces the noise during operation while ensuring the blowing performance.

It should be noted that the blowing force in this embodiment may be of a value between 16 N and 23 N in the medium working conditions, such as 16 N, 17 N, 18 N, 19 N, 20 N, 21 N, and 22 N, and the noise can be controlled to be greater than or equal to 53 dBA and less than 57 dBA, such as 53 dBA, 54 dBA, 55 dBA, and 56 dBA. Similarly, the blowing force is of a value greater than 23 N under the heavy working conditions, such as 24 N, 25 N, 27 N, 29 N, 30 N, 35 N, and 40 N, and the noise in one of embodiments may be of a value between 53 dBA and 0.0121F²-0.0603F+53.065 dBA, such as 53 dBA, 54 dBA, 55 dBA, 56 dBA, 58 dBA, 60 dBA, 62 dBA, 63 dBA, 64 dBA, and 65 dBA. In this embodiment, the acquisition of the blowing force requires the garden tool 100 to be at a maximum rotational speed, in other words, a maximum blowing force value acquired when the garden tool 100 operates at the maximum rotational speed, and the noise is measured under the maximum rotational speed.

More preferably, when the blowing force of the garden tool 100 is greater than 23 N and less than or equal to 40 N, the blowing force F and the noise LP satisfy following relationships: 23 N<F≤40 N, and 53 dBA≤LP≤0.0081F²+0.1374F+48.473 dBA.

It should be noted that the blowing force is of a value greater than 23 N under the heavy working conditions, such as 24 N, 25 N, 27 N, 29 N, 30 N, 35 N, and 40 N, and the noise in one of embodiments may be of a value between 53 dBA and 0.0081F²+0.1374F+48.473, such as 53 dBA, 54 dBA, 55 dBA, 56 dBA, 58 dBA, 60 dBA, 62 dBA, and 63 dBA.

It should be further noted that noise data recorded in this embodiment may be acquired according to a noise measuring method for the garden tool 100 specified by GB/T4583-2007, and may also be acquired by EU noise regulations, and the like. For example, the requirements for the testing environment may be one of the following: a free-field laboratory above a reflecting surface; an outdoor flat open space where no other reflectors present except for an emitting surface in the testing environment, such that a sound source radiates into a free space above the reflecting surface; and a room where the impact of a reverberant field on the measured surface sound pressure is relatively smaller compared to a sound source emission field. For the criteria for background noise, averaged background noise at the position of a microphone should be at least 6 dBA, and preferably, 15 dBA or above lower than the measured sound pressure level.

Specifically, community background noise less than 52 decibels may be chosen, multiple (e.g., 8) direction points may be selected along a circle with a radius of 15 meters (50 feet), centered on a test personnel to be subject to A-weighted sound pressure level testing, 8 test values are averaged to obtain a noise value, and a test tool may be a handheld sound level meter.

The garden tool 100 in one of embodiments aims to achieve better noise reduction performance, meaning that under the same blowing force, the product has lower noise. The inventors found through researches that improvements are made on at least one of structures such as an upstream region of an air channel portion 12, the fan 50, first stationary vanes 36, second stationary vanes 39, third stationary vanes 40, and an air intake shield 60. For example, arranging a sound-absorbing or sound-insulating material in the upstream region and/or a downstream region of the air channel portion 12, controlling interval gaps between the fan blades 54 of the fan 50, bending front edges 546 of the fan 50 in a rotating direction of the fan 50, and tilting backwards and extending a first front side edge 366 or a second rear side edge 368 of the first stationary vane 36 towards the side of the air outlet 22. The above different improvement structures or different combinations of improvement structures achieve better noise reduction effects.

As below, a noise test is performed on the garden tool 100 with different combinations of two improvement structures to acquire noise data, and referring to Table 1.

**Table 1 provides examples of noise data for the garden tool with different combinations of two improvement structures in one of embodiments.**

| Blowing force/N | Noise 1/dBA | Noise 2/dBA |
|---|---|---|
| 25 | 59.1 | 56.8 |
| 27 | 60.24 | 58.05 |
| 30 | 62.12 | 59.8 |
| 33 | 64.24 | 61.8 |
| 35 | 65.75 | 63.2 |
| 40 | 70 | 66.9 |

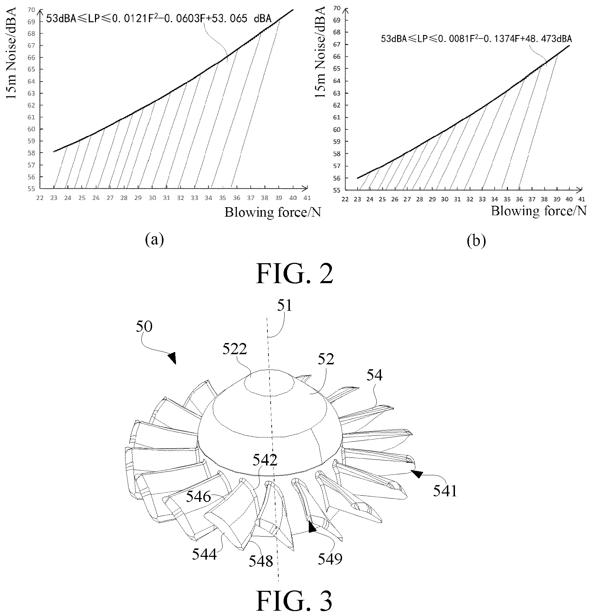

In some specific embodiments, the measured data for noise 1 lies within a diagonally-hatched region below a curve in FIG. 2(a), namely, 53 dBA≤LP≤0.0121F²-0.0603F+53.065 dBA. The data for noise 2 lies within a diagonally-hatched region below a curve in FIG. 2(a), namely, 53 dBA≤LP≤0.0081F²+0.1374F+48.473 dBA.

Specifically, in one of embodiments, the rotational speed of the motor is controlled to be at 13000 r/min to 27000 r/min. Preferably, the rotational speed of the motor is controlled to be at 16000 r/min to 26000 r/min. When the motor runs, the reduced rotational speed results in decreased noise, however, excessively lowering the rotational speed may lead to a decrease in air volume. Accordingly, the rotational speed of the motor is reasonably controlled in one of embodiments, and is set to be at 16000 r/min to 26000 r/min. To realize a garden tool 100 with a reasonable rotational speed and a low-noise effect, it is necessary to effectively reduce the noise of the garden tool 100 while ensuring a reasonable air outflow volume.

Further, the rotational speed of the motor is controlled to be at 18000 r/min to 22000 r/min. Accordingly, the rotational speed of the motor is further limited within a certain range, such that the garden tool 100 can better balance the air outflow volume and the noise lowering volume, thereby enhancing the use experience of the product.

It should be noted that the rotational speed of the motor is any value within 16000 r/min to 26000 r/min. For example, the rotational speed of the motor may be but not limited to 18000 r/min, 18500 r/min, 19000 r/min, 19500 r/min, 20000 r/min, 22000 r/min, 23000 r/min, 24000 r/min, 25000 r/min, and the like, and reducing the rotational speed of the motor will result in decrease in generated noise.

In some embodiments, a diameter of a projection profile of the fan 50 in a plane perpendicular to the fan axis 51 is 88 mm to 120 mm. The diameter of the fan 50 has a certain influence on the air outflow volume. As the diameter of the fan 50 increases, the air outflow volume also increases. However, the too large diameter of the fan 50 not only results in an increase in overall size of the garden tool 100, but also requires the motor to output larger power for acting. Accordingly, in order to balance the air outflow volume, the product size, and motor acting of the garden tool 100, the diameter of the fan 50 is reasonably controlled at 88 mm to 120 mm, which not only increases the air outflow volume but also facilitates downsizing and energy conservation of the garden tool 100, thereby realizing the garden tool 100 with a low rotational speed, a high air volume, and a low-noise effect.

It should be noted that the diameter of the projection profile should be understood as: the projection of the fan 50 in the plane perpendicular to the fan axis 51 is or is similar to a circle outline, and the diameter of the circle outline is the diameter of the projection profile. The diameter of the projection profile during design may be selected as but not limited to 88 mm, 90 mm, 95 mm, 100 mm, 105 mm, 110 mm, 115 mm, 120 mm, and the like.

In some embodiments, an air volume Q, pressure Pₚᵣₑₛₛᵤᵣₑ, and input power P_{power} of the motor of the garden tool 100 with a blowing function respectively satisfy the following relationships: 450 cfm≤Q≤1500 cfm, 1400 Pa≤Pₚᵣₑₛₛᵤᵣₑ≤5000 Pa, and 700 W≤P_{power}≤3000 W. According to the formula that air channel efficiency=(air flow rate in the garden tool 100 × air outlet pressure at the blowing tube 20)/input power of the motor, data of the air volume Q, the pressure Pₚᵣₑₛₛᵤᵣₑ, and the input power P_{power} of the garden tool 100 are respectively reasonably controlled, so as to ensure high air channel efficiency.

Further, the air volume Q, pressure Pₚᵣₑₛₛᵤᵣₑ, and input power P_{power} of the motor of the garden tool 100 with a blowing function respectively satisfy the following relationships: 600 cfm≤Q≤850 cfm, 3000 Pa≤Pₚᵣₑₛₛᵤᵣₑ≤4500 Pa, and 700 W≤P_{power}≤1400 W. According to the formula that air channel efficiency=(air flow rate in the garden tool 100 × air outlet pressure at the blowing tube 20)/input power of the motor, the air channel efficiency of the garden tool 100 is reasonably improved, and the performance of the garden tool 100 is enhanced. The air channel efficiency can be optimized by low noise.

In some embodiments, referring to FIG. 1, the garden tool is a blower for blowing leaves on the ground. The housing is provided with the air inlet 11. The blower includes the air intake shield 60 connected to the air inlet 11, and the fan 50 can rotate around the fan axis 51 and introduce external air through the air intake shield 60. The fan 50 includes: a hub 52, and a plurality of fan blades 54 extending outwards from the hub 52 in a radial direction and distributed around the fan axis 51. The fan blade 54 includes a pressure surface 543 configured for generating airflow, and a suction surface 545. The pressure surface 543 and the suction surface 545 intersect in the direction of the fan axis 51 to form a front edge 546 and a rear edge 548. In the rotating direction of the fan 50, the front edge 546 is located in front of the rear edge 548. In the direction of the fan axis 51, a minimum distance between the front edge 546 of the fan blade 54 of the fan 50 and the air intake shield 60 is D5, and a length of the garden tool is L0, wherein 0.15≤D5:L0≤0.4.

It can be inferred that the too small distance between the fan 50 and the air intake shield 60 may result in direct airflow impacting on the fan 50, which in turn increases operating noise. The too large distance between the fan 50 and the air intake shield 60 not only weakens the suction of the fan 50 at the air intake shield 60, but also leads to an overall increase in length of the electric tool, namely the garden tool 100, making the product bulkier. Thus, a ratio of the minimum distance D5 between the fan 50 and the air intake shield 60 to the length L0 of the garden tool 100 is controlled to be within 0.15 to 0.4. For example, the distance between the air inlet 11 and the front edge 546 of the fan blade 54 is about 200 mm, such that there is sufficient space in front of the fan 50, so as to reduce pressure drop in the garden tool 100 and weaken noise amplitude. Accordingly, the reasonable product structure and smooth air inflow can be ensured, and noise can be reduced.

It should be noted that the minimum distance between the front edge 546 of the fan blade 54 of the fan 50 and the air intake shield 60 should be understood as: the distance, in the direction of the fan axis 51, between the front edge 546 of the fan blade 54 and the air intake shield 60 (e.g., a frame 64 or a three-dimensional air inlet array grid) is minimized. The length of the garden tool 100 should be understood as a distance, in the direction of the fan axis 51, between two end points on the outermost side of the garden tool 100, such as a maximum distance, in the direction of the fan axis 51, between one side surface, facing away from the fan 50, of the air intake shield 60 and the end, away from the fan 50, of the blowing tube 20.

Further, referring to FIG. 1, the blower further includes a duct 30 connected with the housing. The duct 30 includes an outer guide cover 32, an inner guide cover 34, and first stationary vanes 36 connected between the outer guide cover 32 and the inner guide cover 34, and the motor is accommodated in the inner guide cover 34. The air inlet 11 and the outer guide cover 32 are sectioned by a plane perpendicular to the fan axis. A ratio of a cross sectional area S1 of a section of the air inlet 11 to a cross sectional area S2 of a section of the outer guide cover 32 is 1.6 to 4, it can be inferred that the cross sectional area S1 of the air inlet 11 is required to be greater than the cross sectional area S2 of the outer guide cover 32, and the ratio of the two cross sectional areas is controlled to be between 1.6 and 4, thereby ensuring the sufficient air volume in the duct 30 and improving blowing efficiency.

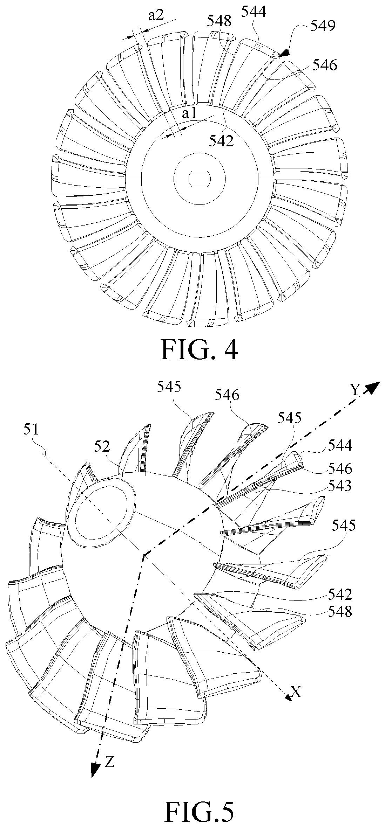

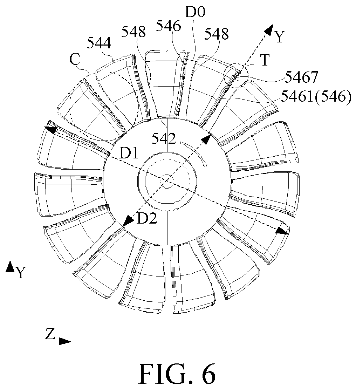

In an embodiment, referring to FIG. 5 and FIG. 6, a garden tool 100 with a blowing function includes: a housing 10, a blowing tube 20, a fan 50, and a motor. The blowing tube 20 is connected with the housing 10, and air may be blown out from the blowing tube 20. The fan 50 rotates around a fan axis 51 to make the air flow. The fan 50 includes: a hub 52, and a plurality of fan blades 54 extending outwards from the hub 52 in a radial direction and distributed around the fan axis 51. The motor drives the fan 50 to rotate around the fan axis 51. The fan blade 54 includes a pressure surface 543 configured for generating airflow, and a suction surface 545. The pressure surface 543 and the suction surface 545 intersect in the direction of the fan axis 51 to form a front edge 546 and a rear edge 548. In the rotating direction of the fan 50, the front edge 546 is located in front of the rear edge 548, and projections of the adjacent front edges 546 and rear edges 548 of two adjacent fan blades 54 do not overlap in the plane perpendicular to the fan axis 51. An interval gap is provided between the projections of the two adjacent fan blades 54 in the plane perpendicular to the fan axis 51, and the interval gap D0 is greater than 0 mm and less than or equal to 4 mm.

According to the above garden tool 100 with a blowing function, the plurality of fan blades 54 are distributed on the hub 52 around the fan axis 51 at intervals, such that the interval gap is provided between the projections of the two adjacent fan blades 54 in the plane perpendicular to the fan axis 51, thereby making the airflow stably pass through the interval gap, and ensuring the blowing efficiency of the garden tool 100. Because the interval gap D0 is controlled to be less than or equal to 4 mm, the gap between two adjacent fans 50 is reduced, and as a result, when the garden tool 100 operates, pulsation of frequency-doubled noise generated by the airflow between the two adjacent fans 50 can be reduced, thereby effectively reducing operation noise of the garden tool 100. In addition, the number of the fan blades 54 in the fan 50 has a negative correlation with a width of the fan blades 54. In other words, the width of the fan blades 54 can be increased by reducing the number of the fan blades 54, and the width of the fan blades 54 can be reduced by increasing the number of the fan blades 54. However, if the manner of increasing the number of the fan blades 54 to reduce the width of the fan blades 54 is adopted to ensure firmness of the fan blades 54, it inevitably causes changes of surface pressure gradient of the fan blades 54, leading to a decrease in blowing efficiency. Thus, the interval gap D0 in one of embodiments is controlled to be less than or equal to 4 mm, and under the premise of ensuring the number of the fan blades 54, the width of the fan blades 54 in the fan 50 is increased as much as possible, so as to improve the blowing efficiency. In one of embodiments, the number of the fan blades 54 is 7 to 23. Preferably, the number of the fan blades may be 11 to 17. For example, the number of the fan blades may be but not limited to 13, 15, and the like.

In some embodiments, referring to FIG. 6, the interval gap D0 is greater than or equal to 2 mm and less than or equal to 3.5 mm. The too large interval gap may increase pulsation of the frequency-doubled noise between the fan blades 54, and the too small interval gap may influence a demolding effect of the fan 50. Accordingly, the interval gap is controlled to be within 2 mm to 3.5 mm, which can not only ensure effective demolding, but also reduce pulsation of the frequency-doubled noise, and improve the noise reduction effect.

It should be noted that the interval gap D0 may be any value between 2 mm and 3.5 mm, such as 2 mm, 2.2 mm, 2.4 mm, 2.6 mm, 2.8 mm, 3 mm, 3.2 mm, 3.4 mm, and 3.5 mm.

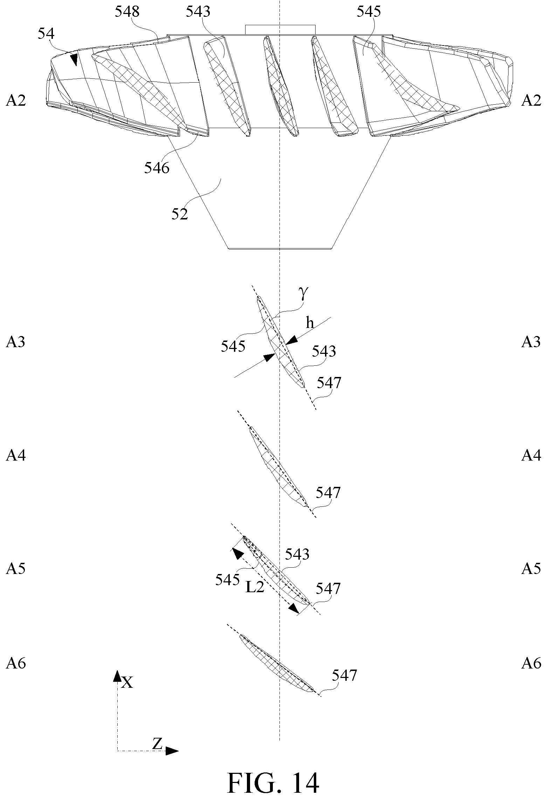

In some embodiments, referring to FIG. 5 and FIG. 14, the fan axis 51 is defined as an X-axis, a line passing through one end point of the front edge 546 close to the hub 52 and perpendicular to and intersected with the fan axis 51 is defined as a Y-axis, and a line perpendicular to and intersected with the X-axis and the Y-axis is defined as a Z-axis; and a maximum distance between projections of the suction surface 545 and the pressure surface 543 in a plane formed by the X-axis and the Z-axis is defined as a maximum thickness h of the fan blade 54. A ratio of the interval gap D0 to the maximum thickness h of the fan 50 ranges from 1 to 1.5, such that by using the maximum thickness h of the fan 50 as a reference, the interval gap D0 is limited to be kept within a reasonable range, thereby effectively reducing the pulsation of the frequency-doubled noise and improving the noise reduction effect.

In some embodiments, the fan blades 54 are formed on the hub 52 through injection molding or die casting. The manufacturing cost can be reduced by integrally forming the fan blades 54 and the hub 52, but when the interval gap between the fan blades 54 is less than 2 mm, the mold manufacturing precision is significantly reduced, meanwhile, the manufacturing difficulty is increased, and thus, the interval gap is preferably greater than or equal to 2 mm. When the interval gap is greater than 3.5 mm, the aerodynamic performance of the fan 50 will be reduced, and on that basis, the interval gap is preferably less than or equal to 4 mm.

It should be noted that the garden tool 100 is configured for performing cleaning work, and may be but not limited to a handheld blower, a knapsack blower, and the like, which can gather scattered debris, and the debris may be leaves or garbage. For ease of understanding, as shown in FIG. 1, the direction of the airflow flowing out from the air outlet 22 is defined as a front end (distal end). For example, the front end of the garden blower refers to the end far away from a user when the user utilizes the garden blower to perform cleaning work. Correspondingly, the side where the airflow inflows is defined as a rear end (proximal end). For example, the proximal end of the garden blower refers to the end of the garden blower close to the user when the user utilizes the garden blower to perform cleaning work. The garden tool 100 with a blowing function roughly longitudinally extends in a direction shown by the arrow A between the front end and the rear end. As shown in FIG. 1, a top of a drawing is defined as the top, a bottom of the drawing is defined as the bottom, a position outwards away from the drawing is defined as a left side, and a position towards the drawing is defined as a right side. It is to be understood that the above definitions are only for descriptive purposes, but cannot be construed as limitations on one of embodiments.

It should be further noted that the hub 52 is roughly in a cylinder shape, which has a closed upstream end and an open downstream end. Specifically, the hub 52 includes a center hole 522. The shape and size of the center hole 522 are constructed to accommodate a motor shaft of the motor and/or a rotor. For example, the motor shaft of the motor may be connected to the center hole 522 in an interference fit manner or other transmission connection manners, the plurality of fan blades 54 extend around a circumferential direction of the hub 52, and the fan axis 51 penetrates through a center of the center hole 522. The fan blades 54 and the hub 52 may be integrally formed, thereby reducing the manufacturing cost, and of course, the fan blades 54 and the hub 52 may also be separately manufactured and then assembled together, which is not limited herein.

An end portion of the hub 52 in an airflow incoming direction during rotation of the fan 50 is provided with a flow guide surface configured for guiding the airflow to flow towards the fan blades 54, and the flow guide surface may be partially or fully shaped as an elliptic paraboloid, an elliptic cone, a circular conical surface, and the like, which is not limited herein. Accordingly, the flow guide surface can guide the airflow to generate rotational flow, thereby preventing the airflow from vertically impacting the fan blades 54, so as to reduce the noise.

In addition, interval gaps are provided between the projections of the adjacent front edges 546 and rear edges 548 of two adjacent fan blades 54 in a plane perpendicular to the fan axis 51. Accordingly, the airflow can be guided to enter the area of the duct 30 between the fan blades 54, so as to avoid generation of vortex and reduce the noise. In some embodiments, the interval gap continuously changes from a root portion 542 to a top edge 544. For example, in an embodiment shown in FIG. 4, the size of the interval gap at the root portion 542 is a1, the interval gap at the top edge 544 is a2, and a1 and a2 are different. Accordingly, when the fan 50 rotates, the pressure gradient of the front edge 546 and the rear edge 548 of the fan blade 54 may be in smooth transition and changing from the top edge 544 to the root portion 542, so as to reduce turbulence energy in the airflow and reduce the tendency of separation of the airflow from the fan blades 54. The base frequency and frequency-doubled noise of noise generated during rotation of the fan blade 54 are both reduced, particularly, most of frequency-doubled noise disappears, and at the high rotational speed, the high-pitched decibel of a blade tip of the fan blade 54 may be reduced to a certain degree, so as to improve user experience.

In the specific embodiment, the projection of the front edge 546 in the plane perpendicular to the fan axis 51 has a first curved profile, the rear edge 548 includes a second curved profile in the projection in the plane perpendicular to the fan axis 51, and a curvature of the first curved profile is different from that of the second curved profile. Accordingly, it can be guaranteed that the interval gap continuously changes from the root portion 542 to the top edge 544.

In some embodiments, referring to FIG. 1, the housing 10 includes the air channel portion 12 roughly extending in the longitudinal direction of the fan axis 51, and an operating handle held by the user. Specifically, the air channel portion 12 is constructed as a hollow tubular body and defines an airflow channel allowing the airflow to flow. Two ends of the air channel portion 12 are provided with a first opening and a second opening communicating with the airflow channel, where the first opening serves as the air inlet 11, such that the external air can enter the air channel portion 12 from the first opening, and the second opening serves as a connecting port to be connected with the blowing tube 20. One end of the blowing tube 20 is detachably connected with the air channel portion 12 through the second opening, and the other end of the blowing tube 20 is provided with the air outlet 22, such that air can be blown out of the blowing tube 20 from the air outlet 22.

It should be noted that the air channel portion 12 may be a tubular body combination formed by connecting two or more sections of tubular bodies. It is to be understood that the garden tool 100 with a blowing function may also have an air suction function, in other words, air together with debris are sucked in from the air outlet 22 of the blowing tube 20 and then are discharged from the above air inlet 11 after passing through the fan 50.

It should be further noted that the plurality of fan blades 54 are the same in geometric shape, and for the sake of brevity, a single fan blade 54 is adopted for further descriptions below. The fan blade 54 extends outwards roughly in the radial direction of the hub 52, and the hub 52 and the fan blade 54 are driven by the motor to rotate around the above fan axis 51, thereby generating airflow moving in the direction of the fan axis 51. As a preferred implementation, the fan axis 51 penetrates through the center of the hub 52, thereby ensuring that the airflow flowing direction is basically parallel to the extending direction of the fan axis 51 and air channel portion 12 and avoiding noise caused by vortex generated by the airflow. A gap is also provided between the fan blade 54 and an inner wall of the air channel portion 12, which not only can avoid interference between the fan blade 54 and the inner wall of the air channel portion 12, but also avoid the noise caused by the vortex formed between the fan blade 54 and the inner wall of the air channel portion 12. Preferably, the size of the gap in the radial direction is less than 1 mm.

Further, referring to FIG. 1, the operating handle includes a grip portion 142. The grip portion 142 is configured for the user to operate and hold. The grip portion 142 is connected to the air channel portion 12 and extends from the air channel portion 12. A trigger may be arranged in the grip portion 142, and the user can operate the trigger so as to control the motor to work or shut down, such that the garden tool 100 with a blowing function is in a working state or non-working state. In some implementation embodiments, the user may also control the rotational speed of the motor by operating the trigger, so as to adjust power of the garden tool 100 with a blowing function at different gears.

In some embodiments, a sound-absorbing material is arranged on at least part of the inner wall of the upstream region of the air channel portion 12. Specifically, the damping sound-absorbing material may be foam or fiber-based composite materials, or for example, glass fiber or natural fiber composite materials, or may also be other high polymer materials such as polyurethane foam. The inventors of this application have found that a main source of noise of the garden tool 100 with a blowing function, such as the garden blower, is primarily attributed to the air channel portion 12. Further analysis has revealed that one reason for the noise generation is the unevenness inside the air channel portion 12. After the airflow impacts the inner wall of the air channel portion 12, the vortex is likely to be generated at depressions, leading to noise. Arranging the sound-absorbing material in the upstream region of the air channel portion 12 may be understood as arranging the sound-absorbing material on at least part of the inner wall of the housing between the air inlet 11 and the fan. On one hand, uneven portions inside an air channel cavity are as smooth as much as possible, minimizing the formation of vortex; and on the other hand, the damping sound-absorbing material can absorb the noise, thereby reducing the noise heard by the user, and improving the operation comfort of the user. As a preferred implementation, the sound-absorbing material is sound-insulating sponge. Of course, further, the sound-absorbing material may be arranged downstream of the fan. Specifically, the outer guide cover is wrapped by the sound-absorbing material in the circumferential direction, and/or the sound-absorbing material is arranged downstream of the outer guide cover.

In some embodiments, the pressure surface 543 and the suction surface 545 are respectively two opposite side surfaces of the fan blade 54. When the fan blade 54 rotates, the pressure surface 543 pushes air to flow towards the side of the air outlet 22, such that the air stably passes through the interval gap so as to form stable airflow flowing.

Meanwhile, the projections of the pressure surface 543 and the suction surface 545 in the plane formed by the X-axis and the Z-axis may be linear profiles or surface profiles. For example, when the pressure surface 543 and the suction surface 545 are first-order or higher-order curved surfaces in the direction of the Y-axis (i.e., the radial direction of the hub 52), the projections of the pressure surface 543 and the suction surface 545 in the plane formed by the X-axis and the Z-axis may at least partially overlap, so as to form the surface profiles. In this case, the maximum distance between the projections of the pressure surface 543 and the suction surface 545 may be understood as a length of a line connecting any point on the projection of the pressure surface 543 and a corresponding point on the projection of the suction surface 545. Of course, when the thickness h of the fan 50 is determined, a sectional method may also be adopted. For example, the fan blade 54 is sequentially sectioned from the root portion 542 to the top edge 544 in a plane parallel to the plane formed by the X-axis and the Z-axis. In this case, the pressure surface 543 and the suction surface 545 are respectively linear profiles on corresponding sections; and a maximum distance between the two linear profiles is taken as the thickness h of the fan 50. Alternatively, during verification, measuring tools such as a vernier caliper may also be clamped onto the pressure surface 543 and the suction surface 545 to perform direct measurement.

In some embodiments, referring to FIG. 6, a ratio of a diameter D2 of the hub 52 to a diameter D1 of the projection profiles of all the fan blades 54 in the plane perpendicular to the fan axis 51 is 0.4 to 0.6, in other words, the wheel-hub 52 ratio of the fan 50 is 0.4 to 0.6, thereby ensuring the blowing efficiency of the fan 50 and improving the operation efficiency.

It should be noted that the ratio of the diameter D2 of the hub 52 to the diameter D1 of the projection profiles of all the fan blades 54 in the plane perpendicular to the fan axis 51 may be any value between 0.4 and 0.6. For example, the ratio of the diameter D2 of the hub 52 to the diameter D1 of the projection profiles of all the fan blades 54 in the plane perpendicular to the fan axis 51 is 0.4, 0.45, 0.5, 0.55, 0.6, and the like.

Specifically, the ratio of the diameter D2 of the hub 52 to the diameter D1 of the projection profiles of all the fan blades 54 in the plane perpendicular to the fan axis 51 is 0.5, such that configuration of the wheel-hub 52 ratio of the fan 50 is more reasonable, and the blowing effect is better.

In some embodiments, the fan blade 54 includes the root portion 542 fixed to the hub 52, the top edge 544 spaced from the hub 52, the front edge 546, and the rear edge 548. The root portion 542 is the radial innermost edge of the fan blade 54 closest to the hub 52 and attached to the hub 52, and the top edge 544 is the radial outermost edge of the fan blade 54 spaced from the hub 52. The front edge 546 is the foremost edge in the direction of the airflow passing through the fan 50, and is also an edge of the fan blade 54 with which the airflow firstly makes contact in the rotating process of the fan 50, and the front edge 546 extends between the root portion 542 and the top edge 544. The rear edge 548 is the rearmost edge in the direction of the airflow passing through the fan 50, and is also an edge of the fan blade 54 with which the airflow lastly makes contact in the rotating process of the fan 50, and the rear edge 548 extends between the root portion 542 and the top edge 544. A first end, at the root portion 542, of the front edge 546 is attached to the hub 52; a second end, at the root portion 542, of the front edge 546 is spaced from the hub 52; a first end, at the root portion 542, of the rear edge 548 is attached to the hub 52; and a second end, at the root portion 542, of the rear edge 548 is spaced from the hub 52.

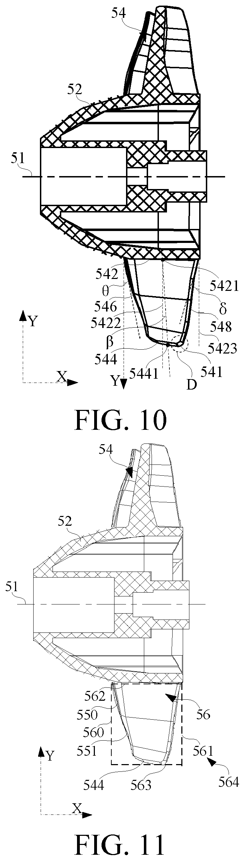

In some embodiments, referring to FIG. 10, a garden tool 100 with a blowing function includes: a housing 10, a blowing tube 20, a fan 50, and a motor. The blowing tube 20 is connected with the housing 10, and the blowing tube 20 is provided with an air outlet 22 for air to be blown out. The fan 50 rotates around a fan axis 51 to make the air flow and blow the air out from the air outlet 22. The motor drives the fan 50 to rotate around the fan axis 51. The fan 50 includes: a hub 52, and a plurality of fan blades 54 extending outwards from the hub 52 in a radial direction and distributed around the fan axis 51. The fan blade 54 includes a root portion 542 fixed to the hub 52, a top edge 544 spaced from the hub 52, and a front edge 546 and a rear edge 548 extending between the root portion 542 and the top edge 544. In a rotating direction of the fan 50, the front edge 546 is located in front of the rear edge 548. The fan axis 51 is defined as an X-axis, and a line passing through the end point of the front edge 546 close to the hub 52 and perpendicular to and intersected with the fan axis 51 is defined as a Y-axis. A line perpendicular to and intersected with the X-axis and the Y-axis is defined as a Z-axis. Midpoints of projections of the root portion 542 and the top edge 544 in a plane formed by the X-axis and the Y-axis are correspondingly defined as a first midpoint 5421 and a second midpoint 5441. A line passing through the first midpoint 5421 and parallel to the Y-axis is defined as a first vertical axis 5422. In an airflow flowing direction, the second midpoint 5441 is located on the downstream side of the first vertical axis 5422 facing the air outlet 22 of the blowing tube 20.

According to the above garden tool 100 with a blowing function, the plurality of fan blades 54 are distributed on the hub 52 around the fan axis 51 at intervals, thereby making the airflow stably pass through two adjacent fan blades 54, and ensuring the blowing efficiency of the garden tool 100. The second midpoint 5441 of the top edge 544 is located on one side of the first vertical axis 5422 facing the air outlet 22 of the blowing tube 20, in other words, the second midpoint 5441 does not cross the first vertical axis 5422 along an air inlet side facing the garden tool 100, and thus, the overall top edge 544 tends to extend towards the air outlet 22 relative to the root portion 542. This design ensures better alignment between the shape design of the fan 50 and the airflow direction, reduces collisions between the airflow and the fan blades 54, and increases the length of a path through which the airflow passes, so as to increase the work done by the airflow on surfaces of the fan blades 54, reduce the noise, and improve the blowing efficiency.

It should be noted that the hub 52 is roughly in a cylinder shape, which has a closed upstream end and an open downstream end. The shape of the hub 52 is designed similarly to any above embodiment, which may be directly referred to the above description, and is not specifically described herein.

It should be further noted that the root portion 542 is the radial innermost edge of the fan blade 54 closest to the hub 52 and attached to the hub 52, and the top edge 544 is the radial outermost edge of the fan blade 54 spaced from the hub 52. The front edge 546 is the foremost edge in the direction of the airflow passing through the fan 50, and is also an edge of the fan blade 54 with which the airflow firstly makes contact in the rotating process of the fan 50, and the front edge 546 extends between the root portion 542 and the top edge 544. The rear edge 548 is the rearmost edge in the direction of the airflow passing through the fan 50, and is also an edge of the fan blade 54 with which the airflow lastly makes contact in the rotating process of the fan 50, and the rear edge 548 extends between the root portion 542 and the top edge 544. A first end, at the root portion 542, of the front edge 546 is attached to the hub 52; a second end, at the root portion 542, of the front edge 546 is spaced from the hub 52; a first end, at the root portion 542, of the rear edge 548 is attached to the hub 52; and a second end, at the root portion 542, of the rear edge 548 is spaced from the hub 52.

Further, referring to FIG. 10, an included angle β between a line connecting the first midpoint 5421 and the second midpoint 5441 and the first vertical axis 5422 is 0° to 9°. It can be inferred that the line connecting the first midpoint 5421 and the second midpoint 5441 obliquely extends towards the side of the air outlet 22, and an included angle between the oblique extending direction and the first vertical axis 5422 is controlled to be 0° (not including 0°) to 9°, thereby further increasing the work done by the airflow on the surfaces of the fan blades 54, and further improving the noise reduction effect.

Optionally, the included angle β between the line connecting the first midpoint 5421 and the second midpoint 5441 and the first vertical axis 5422 may be but not limited to 1°, 2°, 3°, 5°, 7°, 8°, 9°, and the like. In some specific embodiments, the included angle β between the line connecting the first midpoint 5421 and the second midpoint 5441 and the first vertical axis 5422 is 2°.

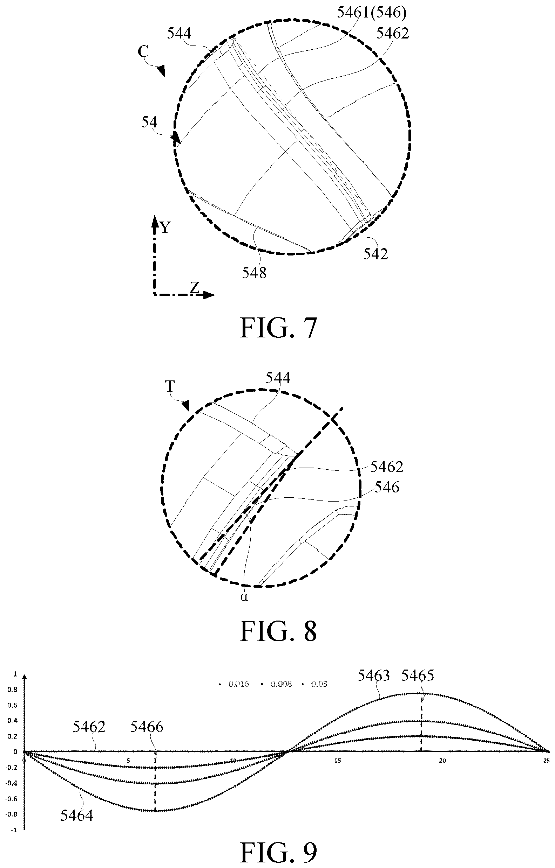

In some embodiments, referring to FIG. 7, the projection of the front edge 546 in a plane formed by the Y-axis and the Z-axis (i.e., the plane perpendicular to the X-axis) is defined as a front side projection 5461. A line connecting two opposite end points of the front side projection 5461 is defined as a chord line L 5462. At least two positions of the front side projection 5461 are respectively located on two opposite sides of the chord line L 5462. It can be inferred that relative to the chord line L 5462, the front side projection 5461 has at least one position crossing the chord line L 5462 and one position not crossing the chord line L 5462, in other words, the projection of the front edge 546 in the plane formed by the Y-axis and the Z-axis has at least two concave-convex positions. Thus, by reflecting the concave-convex characteristics of the front side projection 5461 to the fan blade 54, it can be inferred by observing the front edge 546 in the plane formed by the Y-axis and the Z-axis, the front edge 546 is at least designed with a quadratic curve, such that the pressure gradient of the front edge 546 and the rear edge 548 of the fan blade 54 may be in smooth transition and changing from the root portion 542 to the top edge 544, thereby reducing turbulence in the airflow, reducing the tendency of separation of the airflow from the fan blades 54, and minimizing the noise.

It should be noted that the projection of the front edge 546 may have two positions respectively located on the two opposite sides of the chord line L 5462, and may also have two positions both located on one side of the chord line L 5462, and one position located on the other side of the chord line L 5462; or, may have two positions both located on one side of the chord line L 5462, and two positions both located on the other side of the chord line L 5462, in other words, the front edge 546 is designed with a quartic curve.

Further, referring to FIG. 7, the front side projection 5461 at an outer profile of a part of the front edge 546 away from the hub 52 deviates from the chord line L 5462, and is concave towards the side away from the air outlet 22 of the blowing tube 20. The front side projection 5461 at the outer profile of a part of the front edge 546 close to the hub 52 deviates from the chord line L 5462, and is convex towards the side of the air outlet 22 of the blowing tube 20. It can be inferred that the front edge 546 in the plane formed by the Y-axis and the Z-axis is in waveform design, a part of the front side projection 5461 of the front edge 546 away from the hub 52 is designed to be convex, such that the part of the end, close to the front edge 546, of the fan blade 54 in a three-dimensional space has the waveform design, and the end away from the hub 52 is forwards curved, thereby reducing the tendency of separation of the airflow from the fan blade 54, and minimizing the noise.

It should be noted that the front side projection 5461 of the front edge 546 in the plane formed by the Y-axis and the Z-axis has concave and convex deviation design relative to the chord line L 5462, and concavity and convexity may be different in radian and may also be kept consistent. When concavity and convexity at two positions of the front side projection 5461 are kept consistent in radian, the front side projection 5461 has sinusoidal waveform design.

Specifically, referring to FIG. 9, the front side projection 5461 is a sine curve, and the front side projection 5461 includes a crest segment 5463 and a trough segment 5464 which are located on two opposite sides of the chord line L 5462. The crest segment 5463 is close to the root portion 542 and is convex towards one side of the air outlet 22 of the blowing tube 20 relative to the chord line L 5462; and the trough segment 5464 is close to the top edge 544, and is concave away from the side of the air outlet 22 of the blowing tube 20 relative to the chord line L 5462. A maximum vertical distance between the crest segment 5463 and the chord line L 5462 and a maximum vertical distance between the trough segment 5464 and the chord line L 5462 are respectively defined as a first chord height 5465 and a second chord height 5466. A ratio of the first chord height 5465 to the length of the chord line L 5462 and a ratio of the second chord height 5466 to the length of the chord line L 5462 both may be 0.008 to 0.03. For example, the ratio of the first chord height 5465 to the length of the chord line L 5462 and the ratio of the second chord height 5466 to the length of the chord line L 5462 both may be 0.016, 0.008, 0.03, and the like. The specific structure may be referred to FIG. 9, taking the length of the chord line L 5462 of 25.1 mm as an example, when the ratio of the first chord height 5465 to the chord line L 5462 and the ratio of the second chord height 5466 to the chord line L 5462 are both 0.03, a curve is marked with ◆; when the ratio of the first chord height 5465 to the chord line L 5462 and the ratio of the second chord height 5466 to the chord line L 5462 are both 0.008, a curve is marked with •; and when the ratio of the first chord height 5465 to the chord line L 5462 and the ratio of the second chord height 5466 to the chord line L 5462 are both 0.016, a curve is marked with ▲.

In some specific embodiments, the ratio of the first chord height 5465 to the length of the chord line L 5462 and the ratio of the second chord height 5466 to the length of the chord line L 5462 are both preferably 0.016.

In an embodiment, referring to FIG. 6, the projection of the front edge 546 in the plane formed by the Y-axis and the Z-axis is defined as the front side projection 5461. The front side projection 5461 bends and extends at the outer profile of the part of the front edge 546 away from the hub 52, such that a concave structure 5467 is formed on the front side projection 5461. An opening orientation of the concave structure 5467 is kept consistent with the rotating direction of the fan 50, in other words, in the three-dimensional space, the part of the front edge 546 away from the hub 52 bends and inclines forwards in the rotating direction of the fan 50, thereby facilitating airflow gathering and realizing the noise reduction effect.

It should be noted that one end of the front side projection 5461 bends towards the rotating direction of the fan 50, which causes partial bending of the pressure surface 543 and the suction surface 545 on the two sides of the fan blade 54. For example, parts, close to an attachment point between the front edge 546 and the top edge 544, of the pressure surface 543 and the suction surface 545 bend in the rotating direction of the fan 50.

It should be further noted that in the plane formed by the Y-axis and the Z-axis, the projection of the front edge 546 (i.e., the front side projection 5461) is located in front of the projection of the rear edge 548 in the rotating direction of the fan 50; and meanwhile, in the plane formed by the X-axis and the Y-axis, the projection of the rear edge 548 is closer to the air outlet 22 relative to the projection of the front edge 546. In this case, the fan blade 54 on the hub 52 roughly obliquely extends in the radial direction relative to the hub 52.

Further, referring to FIG. 6 and FIG. 8, a bending angle α between a tangent line, at an intersection point that is of outer profiles of the front edge 546 and the top edge 544 and that is away from the hub 52, of the front side projection 5461 and the chord line L 5462 is 5° to 15°. Accordingly, the bending angle of one end of the front side projection 5461 is controlled to be at 5° to 15°, thereby further improving flowing of the airflow and improving noise reduction performance of the garden tool 100.

It should be noted that the bending angle of one end of the front side projection 5461 may be 5°, 7°, 9°, 11°, 13°, 14°, 15°, and the like.

In some embodiments, referring to FIG. 10, the projection of the front edge 546 in the plane formed by the X-axis and the Y-axis is located on one side of the Y-axis facing the air outlet 22. It can be inferred that the whole front edge 546 extends towards the air outlet 22 relative to the Y-axis, such that the fan blades 54 are better matched with the airflow, thereby reducing collisions between the airflow and the fan blades 54, lengthening the path of the airflow on the fan blades 54, increasing the work done by the airflow on the surfaces of the fan blades 54, and further improving the blowing efficiency.

It should be noted that the projection of the front edge 546 in the plane formed by the X-axis and the Y-axis may be a straight line or a curve. It should be noted that if the projection of the front edge 546 in the plane formed by the X-axis and the Y-axis is the straight line, it does not mean that the front edge 546 is designed into a straight line structure in the three-dimensional space, because the front edge 546 in the plane formed by the Y-axis and the Z-axis may also be designed into the curve. For example, by observing in the plane formed by the Y-axis and the Z-axis, one end of the front edge 546 bends towards the rotating direction of the fan 50.

When the projection of the front edge 546 in the plane formed by the X-axis and the Y-axis is the curve, the curve may be a curve of the first degree or a curve of higher degree. For example, the projection of the front edge 546 in the plane formed by the X-axis and the Y-axis is firstly convex towards one side of the air inlet 11 of the housing 10 from the end close to the root portion 542 to the end close to the top edge 544, and then is concave towards one side of the air outlet 22. Of course, the projection may continue to be sequentially convex and concave.

Specifically, referring to FIG. 11, the projection of the front edge 546 in the plane formed by the X-axis and the Y-axis is a quadratic curve. For example, the projection in the direction from the end of the front edge 546 close to the root portion 542 to the end of the front edge 546 close to the top edge 544 includes a first arc segment 550, and a second arc segment 551 attached to the first arc segment 550. The first arc segment 550 is convex towards the side of the air inlet 11 of the housing 10, and the second arc segment 551 is concave towards the side of the air outlet 22. Such design ensures better alignment between the shape design of the fan blades 54 and airflow flowing, and increases the work done by the airflow on the surfaces of the fan blades 54. The curvature of being convex towards the side of the air inlet 11 of the housing 10 and the curvature of being concave towards the side of the air outlet 22 may be different or may be kept consistent. For example, if the convex curvature is identical to the concave curvature, the projection of the front edge 546 in the plane formed by the X-axis and the Y-axis may also be a sine curve.

In some embodiments, referring to FIG. 10, an included angle θ between the Y-axis and a tangent line, at the end point of the front edge 546 close to the hub 52, of the projection of the front edge 546 in the plane formed by the X-axis and the Y-axis is 3° to 25°. Setting of the included angle θ may influence the inclination amplitude of the front edge 546 towards the side of the air outlet 22. If the included angle θ is too small, the inclination amplitude of the front edge 546 towards the side of the air outlet 22 may be too small, and as a result, the effect of lengthening the airflow path cannot be achieved. If the included angle θ is too large, the overall inclination amplitude of the fan blades 54 is large. In this case, it is necessary to ensure that an axial length of the hub 52 is long enough to allow the top edge 544 to approach the inner wall of the housing 10, which will inevitably result in an increase in overall size of the garden tool 100, making the product bulky and inconvenient for use. Thus, the included angle θ is reasonably controlled to be at 3° to 25° in this embodiment, such that the garden tool 100 combines minimization and a high blowing rate.

It should be noted that the tangent line at the end point of the front edge 546 close to the hub 52 may also be understood as a tangent line, at the intersection point of the front edge 546 and the root portion 542 of the fan blade 54, of the projection of the front edge 546 in the plane formed by the X-axis and Y-axis. In addition, the included angle θ may be but not limited to 3°, 6°, 9°, 12°, 15°, 18°, 21°, 24°, 25°, and the like.

Specifically, the included angle θ is preferably 6°, such that the airflow tends to be slow, thereby reducing formation of turbulence and effectively reducing the noise.

In some embodiments, referring to FIG. 10, a line passing through one end point of the rear edge 548 close to the hub 52 and perpendicular to the X-axis is defined as a second vertical axis 5423; and the projection of the rear edge 548 in the plane formed by the X-axis and the Y-axis is located on one side of second vertical axis 5423 facing away from the air outlet 22 of the blowing tube 20. It can be inferred that the rear edge 548 tends to incline forwards relative to the side of the air inlet 11, such that the pressure gradient of the front edge 546 and the rear edge 548 of the fan blade 54 may be in smooth transition and changing from the root portion 542 to the top edge 544, thereby reducing the turbulence in the airflow, and minimizing the noise.

It should be noted that the front edge 546 of the fan blade 54 includes a curved profile in a meridional plane established by axial and radial axes (i.e., the plane formed by the X-axis and the Y-axis), and the rear edge 548 includes a curved profile in the meridional plane established by the axial and radial axes. In other words, the fan blade 54 is in a twisted state in the three-dimensional space. For example, when the fan blade 54 is observed in the meridional plane defined by the axial and radial axes extending parallel to the fan axis 51, both the front edge 546 and the rear edge 548 of the fan blade 54 have the curved profiles.

It is to be understood that in some other embodiments, the projection of at least part of at least one of the front edge 546 and the rear edge 548 in the plane perpendicular to the fan axis 51 may also have a straight profile, and correspondingly, the projection of at least part of at least one of the front edge 546 and the rear edge 548 in the above meridional plane may also have a straight profile, which is not limited herein.

It should be particularly noted that at least part of at least one of the projections of the front edge 546 and the rear edge 548 in the plane perpendicular to the fan axis 51 has the curved profile, at least one of the front edge 546 and the rear edge 548 deviates, in terms of a rotation angle of the fan 50, from a line extending in the radial direction from a center point of the fan 50, such that the front edge 546 of the fan blade 54 is swept rearwards, and the rear edge 548 is swept frontwards. In the specific embodiment shown in FIG. 9, both the front edge 546 and the rear edge 548 of the fan blade 54 deviate, in terms of the rotation angle of the fan 50, from the line extending in the radial direction from the center point of the fan 50, such that the fan blade 54 is integrally swept rearwards.

Further, referring to FIG. 10, an included angle δ between a tangent line, at an intersection point of the rear edge 548 and the hub 52, of the projection of the rear edge 548 in the plane formed by the X-axis and the Y-axis, and the second vertical axis 5423 is 8° to 20°. Accordingly, the included angle δ is reasonably controlled, such that the airflow tends to be slow, thereby improving the noise reduction effect.

It should be noted that the included angle δ may be but not limited to 8°, 10°, 12°, 14°, 16°, 18°, 20°, and the like.

Specifically, the included angle δ is preferably 14°, such that the airflow tends to be slow, which is more conductive to reducing the noise.

It should be further noted that an included angle between a tangent line, at one end point of the rear edge 548 close to the top edge 544, of the projection of the rear edge 548 in the plane formed by the X-axis and the Y-axis and the X-axis is 0° (not including 0°) to 45°.

In some embodiments, referring to FIG. 11, the projection of the fan blade 54 in the plane formed by the X-axis and the Y-axis is defined as a blade projection 56. Lines respectively passing through two end points of the blade projection 56 at the root portion 542 and perpendicular to the X-axis are respectively defined as a first edge line 560 and a second edge line 561. A line connecting the two end points of the blade projection 56 at the root portion 542 is defined as a third edge line 562. A line passing through one end point of the blade projection 56 farthest from the root portion 542 and parallel to the third edge line 562 is defined as a fourth edge line 563. The first edge line 560, the second edge line 561, the third edge line 562, and the fourth edge line 563 enclose to form a quadrilateral surface 564. The ratio of the area of the blade projection 56 to the area of the quadrilateral surface 564 is 0.6 or above.

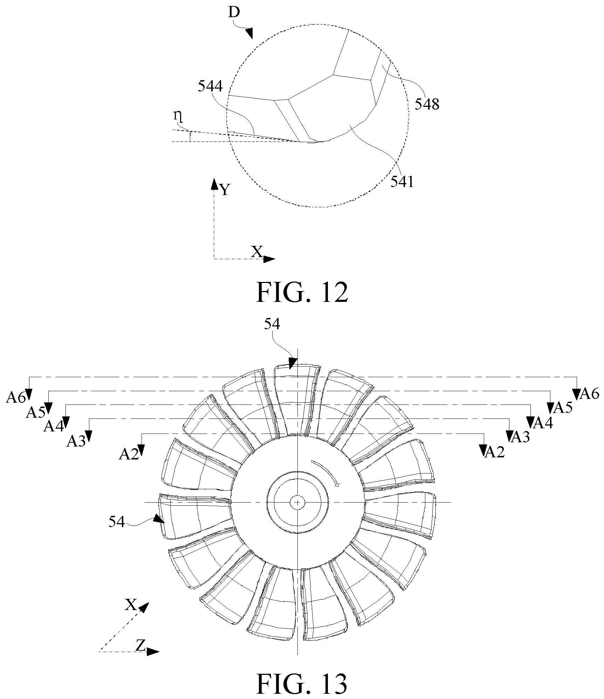

In some embodiments, referring to FIG. 13 and FIG. 14, the fan 50 is sectioned by a plane perpendicular to the Y-axis, a line connecting intersection points between the section and the front edge 546 and the rear edge 548 is defined as an installation line 547, and an installation included angle γ between the installation line 547 and the X-axis is gradually increased from the root portion 542 to the top edge 544. It can be inferred that the fan blades 54 are twisted, and the installation included angle at the root portion 542 is minimum, such that more fan blades 54 can be arranged on the hub 52. In order to achieve high efficiency of forming the airflow during rotation of the fan blade 54, the smaller installation included angle γ between the root portion 542 of the fan blade 54 and the X-axis does not necessarily result in a better effect.

In order to further arrange more fan blades 54 on the hub 52, the cross section of the root portion 542 of the fan blade 54 is different from the cross section of the top edge 544 of the fan blade 54 in shape, and the length of the root portion 542 of the fan blade 54 in the extending direction thereof is smaller than the length of the top edge 544 of the fan blade 54 in the extending direction thereof, in other words, the length of the side, connected with the hub 52, of the fan blade 54 in the extending direction thereof is smaller than the length of the side, away from the hub 52, of the fan blade 54 in the extending direction thereof. The smaller diameter of a joint between the hub 52 and the fan blade 54 leads to a small circumference. When the length of the root portion 542 of the fan blade 54 in the extending direction thereof is smaller than the length of the top edge 544 of the fan blade 54 in the extending direction thereof, more fan blades 54 may be arranged in the circumferential direction of the hub 52.

In addition, the installation included angle γ between the installation line 547 and the X-axis is gradually increased from the root portion 542 to the top edge 544, such that the pressure gradient of the front edge 546 and the rear edge 548 of the fan blade 54 may be in smooth transition and changing from the root portion 542 to the top edge 544, thereby reducing the tendency of separation of the airflow from the fan blade 54, reducing the turbulence in the airflow, and minimizing the noise.

It should be noted that a changing transition rate of the installation included angle γ between the installation line 547 and the X-axis from the root portion 542 to the top edge 544 may be kept consistent, or not consistent. For example, the changing transition rate from the installation included angle γ at the root portion 542 to the installation included angle γ at a radial midpoint of the fan blade 54 between the root portion 542 and the top edge 544 is lower than the changing transition rate from the installation included angle γ at the midpoint to the installation included angle γ at the top edge 544, and the like.

Further, referring to FIG. 14, the installation included angle γ between the installation line 547 and the X-axis is 5° to 30° at the root portion 542. The installation included angle γ at the root portion 542 may be but not limited to 5°, 10°, 15°, 20°, 25°, 30°, and the like. In some specific embodiments, the installation included angle γ at the root portion 542 is preferably 17°.

In some embodiments, referring to FIG. 11, the included angle γ between the installation line 547 on the top edge 544 and the X-axis is 30° to 85° at the top edge 544. The installation included angle γ at the top edge 544 may be but not limited to 30°, 40°, 50°, 60°, 70°, 80°, 85°, and the like.

It should be noted that when the installation included angle γ at the root portion 542 is 5° to 30° and the included angle γ at the top edge 544 is 30° to 85°, the pressure gradient between the fan blades 54 more tends to be in smooth transition and changing, thereby effectively reducing the turbulence in the airflow, and minimizing the noise.

In some embodiments, referring to FIG. 10 and FIG. 12, the fan blade 54 further includes a curved surface transition portion 541 located at a junction of the rear edge 548 and the top edge 544 and approaching the hub 52 from the top edge 544, and an arc surface of the curved surface transition portion 541 is convex away from the hub 52. In some specific implementations, the curved surface transition portion 541 is in an arc shape. When the cross section of the curved surface transition portion 541 is in an arc shape along a plane where the fan blade 54 roughly extends, airflow at a blade tip of the fan blade 54 is better guided to the area of the duct 30 between the fan blades 54 during rotation of the fan blade 54, such that the vortex formed by the blade tip of the fan blade 54 during rotation can be better reduced, then, the pressure of impacting the fan blade 54 by airflow at a wall-attached layer at the blade tip of the fan blade 54 is reduced, and finally, the purpose of further reducing aerodynamic noise is achieved, in other words, blade frequency high-pitched noise is reduced.

Further, a radius length of the curved surface transition portion 541 ranges from 2 mm to 6 mm. Of course, in some other embodiments, the radius length of the curved surface transition portion 541 may also be limited within 0.5 mm to 5 mm, for example, the radius length of the curved surface transition portion 541 may be 0.5 mm, 2 mm, 3 mm, 4 mm, and 5 mm.

In some embodiments, a corner radius of a projection of the curved surface transition portion 541 in the plane formed by the X-axis and the Y-axis is 1 mm to 5 mm. For example, the corner radius may be but not limited to 1 mm, 2 mm, 3 mm, 4 mm, 5 mm, and the like. Thus, the vortex formed by the blade tip of the fan blade 54 during rotation can be better reduced, so as to reduce the blade frequency high-pitched noise.

In some embodiments, referring to FIG. 12, an included angle η between the Y-axis and a tangent line, at one end point of the curved surface transition portion 541 close to the top edge 544, of the projection of the curved surface transition portion 541 in the plane formed by the X-axis and the Y-axis is 0° to 45°. In some specific embodiments, the included angle η may be 8°.

In some embodiments, referring to FIG. 3, the fan blade 54 further includes a blade tip end 549 located at the intersection point of the front edge 546 and the top edge 544. Specifically, the front edge 546 of the fan blade 54 includes an inner portion adjacent to the hub 52 and an outer portion adjacent to the top edge 544, the outer portion of the front edge 546 stretches forwards, and the blade tip end 549 is formed at the intersection point with the top edge 544. Accordingly, the blade tip end 549 can cut the airflow, so as to disperse the airflow, thereby preventing airflow gathering to form vortex and increase the noise. In some specific embodiments, an acute-angle or right-angle angular edge is formed at the junction of the front edge 546 and the top edge 544, and the acute angle or the right angle refers to an included angle formed by intersection between surfaces.

In some other specific embodiments, the width of the outer portion of the front edge 546 is gradually reduced in a forward stretching direction, and the width of the top edge 544 is gradually reduced in the stretching direction from the rear edge 548 to the front edge 546, such that a sharp end is formed at the junction of the front edge 546 and the top edge 544, which can similarly play the role of cutting the airflow.

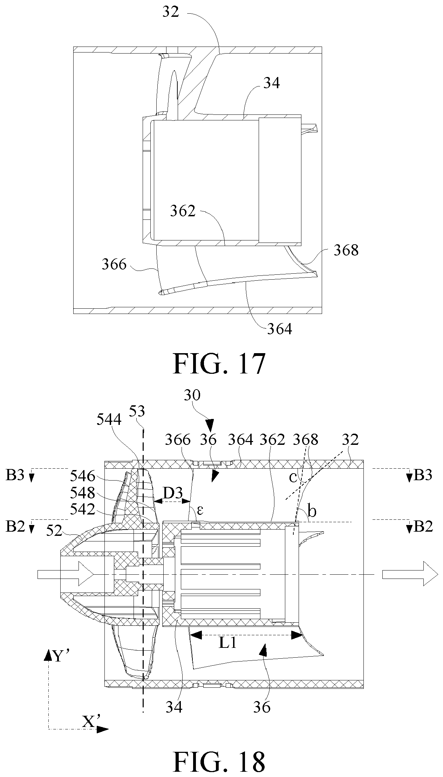

In some embodiments, referring to FIG. 18, the garden tool 100 with a blowing function further includes a duct 30. The duct 30 includes an outer guide cover 32, an inner guide cover 34, and first stationary vanes 36 connected between the outer guide cover 32 and the inner guide cover 34. A gap D3 between projections of the fan blade 54 and the first stationary vane 36 in the plane formed by the X-axis and the Y-axis is gradually enlarged from the root portion 542 to the top edge 544. It can be inferred that when the first stationary vane 36 extends outwards in the radial direction of the hub 52, the farther the first stationary vane 36 is from the fan blade 54, the larger the gap therebetween becomes. As the airflow closer to the top edge 544 of the fan blade 54 is faster, the first stationary vane 36 farther deviates from the fan blade 54 when extending outwards in the radial direction of the hub 52, which can properly enlarge the gap between the first stationary vane 36 and the fan blade 54, such that the airflow at the high-speed part revolves therebetween, so as to prevent the airflow at the top edge 544 from rapidly impacting the first stationary vane 36, thereby ensuring that the airflow on the first stationary vane 36 is kept uniform and achieving the effective noise reduction effect.

It should be noted that the fan 50 may be entirely located in the duct 30, or partially located in the duct 30. Of course, during structure design of the fan 50 and the duct 30, the fan 50 and the duct 30 may be spaced, for example, the duct 30 is located at a downstream end of the fan 50 in the airflow flowing direction.

Meanwhile, the duct 30 is arranged in the air channel portion 12 of the housing 10, and the duct 30 is configured for guiding the airflow to move and rectify the airflow generated by the fan 50. Thus, the duct 30 is located at the downstream region of the air channel portion 12. After the airflow at the upstream region of the air channel portion 12 enters the air channel portion 12 from the air inlet 11, the airflow moves towards the fan 50, and after passing through the fan 50, the airflow moves to the downstream region from the upstream region of the air channel portion 12 to be rectified by the duct 30 and is finally blown out from the blowing tube 20.

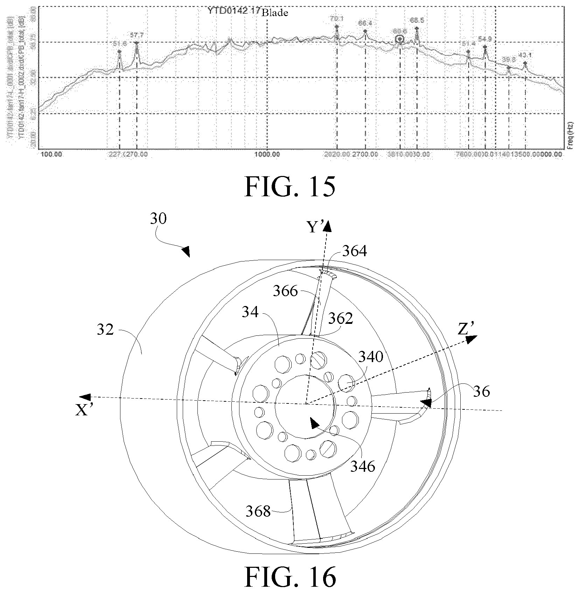

FIG. 15 illustrates a comparison diagram of noise spectra between a fan 50 with 17 fan blades 54 in one of embodiments and a fan 50 with 17 fan blades 54 in the prior art. As shown in FIG. 15, the X-axis in the figure represents the rotational speed of the fan blade 54, and the Y-axis in the figure represents the decibel level of the noise. It can be seen from the figure that under different rotational speeds, the decibel level of noise produced by the fan 50 in one of embodiments is basically less than the decibel level of noise produced by the fan 50 in the prior art. According to weighted overall sound pressure levels obtained under the above two conditions, the fan 50 in one of embodiments shows overall noise reduction of about 2-3 decibels compared with the fan 50 in the prior art. Regarding the blade tip noise multiplied frequency, the fan 50 in one of embodiments shows overall noise reduction of about 5-10 decibels compared to the fan 50 in the prior art, and has the air channel efficiency reduced by less than 2%.

In some embodiments, referring to FIG. 18, the garden tool 100 with a blowing function includes: a housing 10, a blowing tube 20, a duct 30, a fan 50, and a motor. The blowing tube 20 is connected with the housing 10, and the blowing tube 20 is provided with an air outlet 22 for air to be blown out. The duct 30 is connected to the housing 10, and configured for guiding air to flow. The fan 50 rotates around a fan axis 51 to make the air flow. The motor drives the fan 50 to rotate around the fan axis 51. The duct 30 includes an outer guide cover 32, an inner guide cover 34, and first stationary vanes 36 connected between the outer guide cover 32 and the inner guide cover 34. The first stationary vane 36 includes a bottom 362 connected to the inner guide cover 34, a top 364 connected to the outer guide cover 32, and a first front side edge 366 and a first rear side edge 368 located in an airflow flowing direction in a spaced manner. The fan axis 51 is defined as an X-axis, and a plane passing through any point on the fan 50 and perpendicular to the X-axis is defined as a reference plane 53. A distance between one end point of the first front side edge 366 close to the bottom 362 and the reference plane 53 is less than a distance between one end point of the first front side edge 366 close to the top 364 and the reference plane 53.

According to the garden tool 100 with a blowing function, in the airflow flowing process, the speed of the airflow at the top 364 of the first stationary vane 36 is greater than the speed of the airflow at the bottom 362 of the first stationary vane 36 due to the action of air pressure. One end of the first front side edge 366 of the first stationary vane 36 at the bottom 362 is set to be located downstream of the other end of the first front side edge 366 at the top 364, which effectively increases the distance between the end of the first front side edge 366 of the first stationary vane 36 at the top 364 and the fan blade 54. Accordingly, on one hand, the flow path of the high-speed airflow is extended, and noise produced when the airflow impacts the first stationary vane 36 is reduced; and on the other hand, the speed difference of the airflow at the top 364 and the bottom 362 of the first stationary vane 36 is in smooth transition, thereby avoiding the generation of vortex, and further reducing the noise.

It should be noted that the outer guide cover 32 is roughly arranged in the direction of the fan axis 51, the inner guide cover 34 is located in a center of the outer guide cover 32, an airflow circulation space is formed between the outer guide cover 32 and the inner guide cover 34, and a cross section, perpendicular to the fan axis 51, of the circulation space is roughly in a ring shape. The first stationary vanes 36 are located in the ring-shaped circulation space and distributed around the inner guide cover 34 at equal intervals, and a gap between every two spaced first stationary vanes 36 allows the airflow to circulate.

As an implementation, the number of the first stationary vanes 36 is 3 to 11, which can play a flow guiding role without hindering airflow passing or increasing noise caused by too many first stationary vanes 36.

In addition, the inner guide cover 34 also roughly extends in the direction of the fan axis 51; the inner guide cover 34 is hollow inside; and a sectional area of the inner guide cover 34 in a direction perpendicular to the fan axis 51 is less than or equal to a maximum sectional area of the hub 52 of the fan 50 in the direction perpendicular to the fan axis 51.

As an optional implementation, the whole motor is arranged in the inner guide cover 34, or at least part of the motor is arranged in the inner guide cover 34. Preferably, the inner guide cover 34 is cylindrical, between an outer wall of the inner guide cover 34 and an inner wall of the outer guide cover 32 are evenly arranged in the direction of the fan axis 51, such that the airflow can be guided to move in a direction parallel to the fan axis 51, thereby avoiding the noise produced by the vortex.

Further, the inner guide cover 34 includes an accommodating portion and a guide portion connected with the accommodating portion. The accommodating portion is arranged close to the fan 50 and is configured for accommodating the motor, and the guide portion is arranged close to the blowing tube 20 and is integrally formed with the accommodating portion. An installation hole 346 is formed in a rear end, close to the fan 50, of the accommodating portion. The motor is fixed into the accommodating portion through the installation hole 346. One end (front end), close to the blowing tube 20, of the guide portion is provided with an opening configured for guiding out airflow entering the inner guide cover 34. An air guide hole 340 is further formed in the rear end of the accommodating portion. A cooling channel for cooling the motor is formed between the air guide hole 340 and the opening, and the airflow inflows from the air guide hole 340 and outflows from the opening, so as to cool the motor.

It should be noted that there is only one air guide hole 340, and of course, there may also be a plurality of air guide holes 340. As shown in FIG. 16, the plurality of air guide holes 340 are evenly formed around the fan axis 51 in the rear end of the accommodating portion at equal intervals. As a preferred implementation, the cross section of the air guide hole 340 is circular.

In some embodiments, referring to FIG. 18, the fan 50 includes: a hub 52, and a plurality of fan blades 54 extending outwards from the hub 52 in a radial direction and distributed around the fan axis 51. The fan blade 54 includes a root portion 542 fixed to the hub 52, a top edge 544 spaced from the hub 52, and a front edge 546 and a rear edge 548 extending between the root portion 542 and the top edge 544. In a rotating direction of the fan 50, the front edge 546 is located in front of the rear edge 548. A distance between one end point of the first front side edge 366 close to the bottom 362 and one end point of the rear edge 548 close to the root portion 542 is less than a distance between one end point of the first front side edge 366 close to the top 364 and one end point of the rear edge 548 close to the top edge 544. It can be inferred that the part, closer to the top 364, of the first stationary vane 36 is farther from the fan blade 54, which can properly enlarge the gap between the first stationary vane 36 and the fan blade 54, such that the airflow at the high-speed part revolves therebetween, so as to prevent the airflow at the top edge 544 from rapidly impacting the first stationary vane 36. Accordingly, it is guaranteed that the airflow on the first stationary vane 36 is kept uniform, and the effective noise reduction effect is achieved.

In some embodiments, referring to FIG. 18, a distance between one end point of the first rear side edge 368 close to the bottom 362 and the reference plane 53 is less than a distance between one end point of the first rear side edge 368 close to the top 364 and the reference plane 53. It can be inferred that in the airflow flowing direction, one end of the first rear side edge 368 at the bottom 362 is located upstream of the other end of the first rear side edge 368 at the top 364. As shown in FIG. 17, along a longitudinal section parallel to the fan axis 51, the first rear side edge 368 is in an arc shape, and a distance between the end of the first rear side edge 368 at the bottom 362 and a rotating plane of the fan 50 is less than a distance between the other end of the first rear side edge 368 at the top 364 and the rotating plane of the fan 50. Accordingly, when the airflow flows towards the air outlet 22, the airflow with different airflow speeds can be guided, thereby avoiding generation of turbulence in the airflow and achieving the purpose of reducing the decibel level of the noise.

Further, referring to FIG. 18, the fan 50 includes: a hub 52, and a plurality of fan blades 54 extending outwards from the hub 52 in a radial direction and distributed around the fan axis 51. The fan blade 54 includes a root portion 542 fixed to the hub 52, a top edge 544 spaced from the hub 52, and a front edge 546 and a rear edge 548 extending between the root portion 542 and the top edge 544. In a rotating direction of the fan 50, the front edge 546 is located in front of the rear edge 548. A distance between one end point of the first rear side edge 368 close to the bottom 362 and one end point of the rear edge 548 close to the root portion 542 is less than a distance between one end point of the first rear side edge 368 close to the top 364 and one end point of the rear edge 548 close to the top edge 544. Such design can effectively avoid generation of turbulence in the airflow, thereby achieving the purpose of reducing the decibel level of the noise.

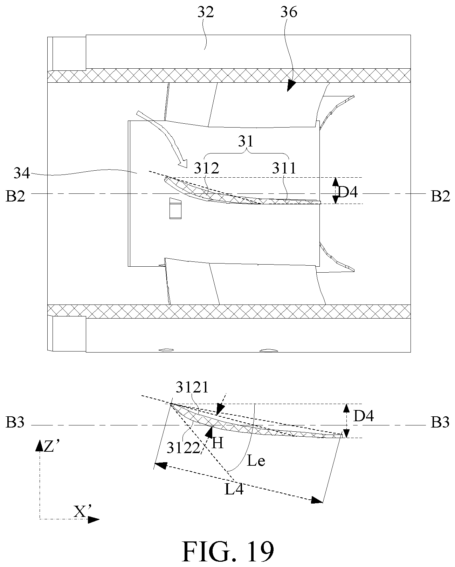

In some embodiments, referring to FIG. 16 and FIG. 19, an axis of the inner guide cover 34 is defined as an X'-axis. A line passing through one end point of the first front side edge 366 close to the bottom 362 and perpendicular to and intersected with the X'-axis is defined as a Y'-axis. A line perpendicular to and intersected with the X'-axis and the Y'-axis is defined as a Z'-axis A part, close to the fan 50, of a stationary vane section 31 obtained by sectioning the first stationary vane 36 by a surface parallel to a plane formed by the X'-axis and the Z'-axis, crosses the X'-axis, and bends and extends in the circumferential direction of the inner guide cover 34. In this case, through observation from the plane formed by the X'-axis and the Z'-axis, a part of the first stationary vane 36 close to the fan 50 is in arc design, which is more effective for airflow guiding, and achieves a good noise reduction effect.

It should be noted that a part of the stationary vane section 31 crossing the X'-axis should be understood as: at least part of the stationary vane section 31 close to the air outlet 22 of the blowing tube 20 is located on one side of the X'-axis or is directly located on the line of the X'-axis, and a part of the stationary vane section 31 close to the fan 50 bends and extends, crosses the X'-axis, and is located on the other side of the X'-axis.

In some embodiments, referring to FIG. 19, the first stationary vane 36 has a windward side and a leeward side opposite to the windward side. Outer profiles of projections of the windward side and the leeward side in the plane formed by the X'-axis and the Z'-axis intersect, and an included angle between a tangent line at one intersection point close to the fan 50 and the X'-axis is defined as a first stationary vane inlet angle Le, where the first stationary vane inlet angle Le is 35° to 65°.

Through researches and development, when the blade inlet installation angle is too large, the inlet impact loss is increased, the blade inlet flow condition is not good, and vortex noise is increased. However, when the blade inlet angle is reduced, the sound pressure level of inlet noise is gradually reduced, but as further decrease in the inlet installation angle, the inlet separation loss of the inlet angle is increased, and the vortex noise is increased as well. Thus, the noise of the garden tool 100 with a blowing function can be reduced by selecting the proper inlet angle. The inventors found through further researches that by setting the inlet angle Le of the first stationary vane 36 to be at 35° to 65°, the efficient flow condition of the airflow can be ensured, and the vortex noise is reduced, thereby reducing the overall noise influence and improving user experience.

In some embodiments, referring to FIG. 19, a maximum height, in the direction of the Z'-axis, of the stationary vane section 31 obtained by sectioning the first stationary vane 36 by the surface parallel to the plane formed by the X'-axis and the Z'-axis is defined as a bending distance D4 of the first stationary vane 36. The bending distance D4 of the first stationary vane 36 is gradually increased from the bottom 362 to the top 364. Thus, a part of the first stationary vane 36 closer to the top 364 has a larger curvature, which results in a better airflow guide effect, thereby achieving a better noise reduction effect.

It should be noted that the maximum height in the direction of the Z'-axis should be understood as: a curved part has an upper end point farthest from the X'-axis after the stationary vane section 31 crosses the X'-axis and bends; and a part of the stationary vane section 31 does not cross the X'-axis or located on the line of the X'-axis has a lower end point farthest from the upper end point. In this case, the maximum height in the direction of the Z'-axis may be a distance between the upper end point and the lower end point in the direction of the Z'-axis.

Further, referring to FIG. 19, the bending distance D4 of the first stationary vane 36 is 1 mm to 15 mm, in other words, the bending distances of the first stationary vane 36 on the bottom 362 and the top 364 are both controlled to be 1 mm to 15 mm. The bending distance D4 may be but not limited to 1 mm, 3 mm, 5 mm, 7 mm, 7.8 mm, 9 mm, 11 mm, 13 mm, 15 mm, and the like.

In some embodiments, referring to FIG. 19, the stationary vane section 31 includes a first part 311 extending along the X'-axis, and a second part 312 crossing the X'-axis and bending and extending in the circumferential direction of the inner guide cover 34. The second part 312 includes a concave line 3121 and a convex line 3122 which are oppositely arranged. A maximum distance between a line connecting two ends of the concave line 3121 and the convex line 3122 is defined as a concave chord height H, where the concave chord height H is 2 mm to 6 mm. It can be inferred that the first part 311 may be located on the line of the X'-axis, and may also be located on one side of the X'-axis; and the second part 312 crosses (or deviates from) the X'-axis and bends. Meanwhile, the concave chord height H is controlled to be 2 mm to 6 mm, which can effectively ensure that the second part 312 is kept with a proper bending curvature, such that the airflow more smoothly flows into a space between the first stationary vanes 36, thereby achieving the purpose of reducing the decibel level of the noise.

In some embodiments, referring to FIG. 18, the projection of the first front side edge 366 in the plane formed by the X'-axis and the Y'-axis is located on one side of the Y-axis facing the air outlet 22 of the blowing tube 20. In other words, by observing from the plane formed by the X'-axis and the Y'-axis, the first front side edge 366 obliquely extends towards the side of the air outlet 22 relative to the Y'-axis in the three-dimensional space. Accordingly, on one hand, the flow path of the high-speed airflow is extended, and noise produced when the airflow impacts the first stationary vane 36 is reduced; and on the other hand, the speed difference of the airflow at the top 364 and the bottom 362 of the first stationary vane 36 is in smooth transition, thereby avoiding the generation of vortex, and further reducing the noise.

Further, referring to FIG. 18, an included angle ε between a tangent line at a position, close to the bottom 362, of the projection of the first front side edge 366 in the plane formed by the X'-axis and the Y'-axis, and the X'-axis is 60° to 90°. Accordingly, the included angle ε between the tangent line at the position, close to the bottom 362, of the projection of the first front side edge 366 and the X'-axis is controlled to at 60° to 90°, such that when the whole first front side edge 366 extends outwards in the radial direction, the first front side edge 366 can better deviate from the X'-axis, and the speed difference of the airflow at the top 364 and the bottom 362 of the first stationary vane 36 more tends to be smooth.

It should be noted that the included angle ε may be but not limited to 60°, 70°, 80°, and the like. In some specific embodiments, the included angle ε is preferably 84°.

It should be further noted that the projection of the first front side edge 366 in the plane formed by the X'-axis and the Y'-axis may be a straight profile or a curve profile. When the projection is the curve profile, it may be a curve of the first degree, a quadratic curve, and the like. For example, a part, close to the inner guide cover 34, of the projection of the first front side edge 366 in the plane formed by the X'-axis and the Y'-axis is convex towards the side of the fan 50; and a part close to the outer guide cover 32 is concave towards the side of the air outlet 22.

In some embodiments, referring to FIG. 18, the projection of the first rear side edge 368 in the plane formed by the X'-axis and the Y'-axis is an arc concave towards the first front side edge 366. Through such a design, the airflow with different flow rates can be better guided, thereby achieving a better noise reduction effect.

Further, referring to FIG. 18, an included angle b between a tangent line at a position, close to the bottom 362, of the projection of the first rear side edge 368 in the plane formed by the X'-axis and the Y'-axis, and the X'-axis is 45° to 90°. The included angle b may be any value between 30° and 90°, for example, the included angle b is 45°, 50°, 60°, 70°, 80°, and the like. In some specific embodiments, the included angle b is preferably 81°. Thus, the arc design of the first rear side edge 368 is optimized, and the guide effect of the first stationary vane 36 is improved.

Further, an included angle c between a tangent line at a position, close to the top 364, of the projection of the first rear side edge 368 in the plane formed by the X'-axis and the Y'-axis, and the X'-axis is smaller than the included angle b. In other words, the curvature of the first rear side edge 368 close to the top 364 is greater than the curvature of the first rear side edge 368 close to the bottom 362, such that a tip part of the first rear side edge 368 can be extended towards the side of the air outlet 22, thereby ensuring that the speed difference of the airflow at the top 364 and the bottom 362 of the first stationary vane 36 is further reduced, ensuring more uniform airflow flowing, and facilitating noise reduction.

It should be noted that the included angle c may be any value between 30° and 90°, for example, the included angle c is 30°, 35°, 40°, 45°, 50°, 60°, 70°, 80°, and the like.

In some embodiments, referring to FIG. 19, the bottom 362 of the first stationary vane 36 is inclined at a first angle relative to the fan axis 51; and the top 364 of the first stationary vane 36 is inclined at a second angle relative to the fan axis 51. Accordingly, the pressure gradient of the first front side edge 366 and the first rear side edge 368 of the first stationary vane 36 may be in smooth transition and changing from the bottom 362 to the top 364, thereby reducing turbulence in the airflow, reducing the tendency of separation of the airflow from the first stationary vane 36, and minimizing the noise.

Further, the first angle is not equal to the second angle, such that the tendency of separation of the airflow from the first stationary vane 36 can be reduced, turbulence in the airflow is reduced, and the noise is minimized. It is particularly emphasized that the main function of the first stationary vane 36 is to rectify the airflow, so as to guide the airflow to flow roughly in the direction of the fan axis 51, and thus, the first stationary vane 36 roughly extends in the direction of the fan axis 51. The first angle and the second angle are kept within a range of 0° to 30°, such that the airflow can be well guided, and meanwhile the noise reduction effect is achieved.

In some embodiments, a length of the first stationary vane 36 is L1, a mid-arc line chord length of the fan blade 54 of the fan 50 is L2, and 3≤L1:L2≤9. It should be noted that, referring to FIG. 14 and FIG. 18, the fan blade 54 has the pressure surface 543 and the suction surface 545 which are opposite to each other, and the mid-arc line of the fan blade 54 refers to a line connecting circle centers of incircles between the pressure surface 543 and the suction surface 545 of the fan blade 54. The length of the first stationary vane 36 is defined as a distance between the first front side edge 366 of the first stationary vane 36 and the first rear side edge 368 of the first stationary vane 36 in the airflow flowing direction. It should be noted that during verification or evidence obtaining, the length of the first stationary vane 36 may be a distance between the first front side edge 366 and the first rear side edge 368 at any position between the bottom 362 and the top 364; or a maximum distance between the first front side edge 366 and the first rear side edge 368 between the bottom 362 and the top 364; or an average value of all distances between the first front side edge 366 and the first rear side edge 368 between the bottom 362 and the top 364. When the mid-arc line chord length L2 is specifically represented, the method for determining the length of the first stationary vane 36 can be adopted as well. But it should be noted that in a same ratio, the value determining manner for the length L1 of the first stationary vane 36 and the mid-arc line chord length L2 should be kept consistent. For example, the length L1 of the first stationary vane 36 is a distance between the first front side edge 366 and the first rear side edge 368 at the bottom 362; and the mid-arc line chord length L2 should be a chord length value of a line connecting circle centers of incircles between the pressure surface 543 and the suction surface 545 at the root portion 542.

It is to be understood that aerodynamic performance parameters of the fan blade 54, such as a geometric air inlet angle, a geometric air outlet angle, a maximum blade thickness, and a maximum deflection are all based on a mid-arc line of the blade, and thus, an error of the mid-arc line directly affects the accuracy of the calculation of aerodynamic performance of the fan 50. The aerodynamic performance of the fan 50 is directly related to the noise produced in the airflow flowing process. The inventors found through researches that rectification and noise reduction performance of the first stationary vane 36 are correlated to the mid-arc line of the fan 50, and found through further researches that one end of the first front side edge 366 at the bottom 362 is located downstream of the other end of the first front side edge 366 at the top 364, and one end of the first rear side edge 368 at the bottom 362 is located upstream of the other end of the first rear side edge 368 at the top 364, such that the length of the first stationary vane 36 varies between the bottom 362 and the top 364. By comprehensively considering the airflow speed and the air pressure, the length of the first stationary vane 36 is set to be 3 to 9 times the mid-arc line chord length of the fan blade 54. On the premise of ensuring good rectification performance, the generation of vortex in the airflow is significantly reduced, which correspondingly leads to a significant decrease in the decibel level of the noise, and the user experience is improved.

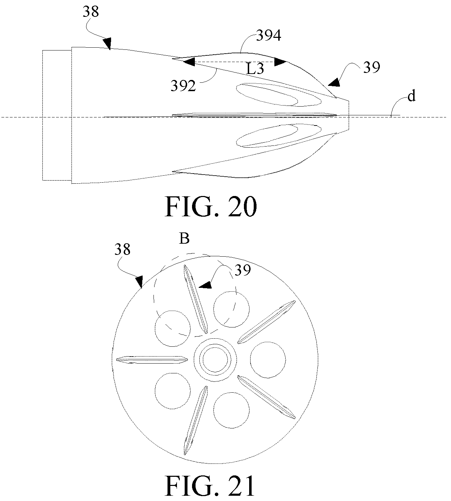

In an embodiment, referring to FIG. 1 and FIG. 20, a garden tool 100 with a blowing function includes: a housing 10, a blowing tube 20, a duct 30, a fan 50, and a motor. The blowing tube 20 is connected with the housing 10, and air may be blown out from the blowing tube 20. The duct 30 is accommodated in the housing 10, and configured for guiding air to flow. The fan 50 rotates around a fan axis 51 to make the air flow. The motor drives the fan 50 to rotate around the fan axis 51. The duct 30 includes an outer guide cover 32, an inner guide cover 34, and first stationary vanes 36 located between the outer guide cover 32 and the inner guide cover 34. The garden tool 100 further includes a guide cone 38 connected to the inner guide cover 34, and second stationary vanes 39 arranged on the guide cone 38. The second stationary vanes 39 are located downstream of the first stationary vanes 36 in the airflow flowing direction.

According to the garden tool 100 with a blowing function, the rotation angle of the airflow produced due to rotation of the fan 50 is reduced under guidance of the first stationary vanes 36. By arranging the second stationary vanes 39, the airflow is further guided to flow in the direction of the fan axis 51, the rotation vortex in the airflow is reduced, and the noise is reduced, thereby further reducing the noise effect, and particularly reducing the vortex frequency in the airflow flowing process, so as to reduce the frequency-doubled high-pitched noise.

It should be noted that the second stationary vanes 39 are located downstream of the first stationary vanes 36, and extend lengthwise in an axial direction of an outer wall of the guide cone 38.

Specifically, referring to FIG. 21, the second stationary vanes 39 are arranged around the guide cone 38 at equal intervals, and the airflow flowing through the first stationary vanes 36 can pass through gaps between the second stationary vanes 39, so as to be guided. As an implementation, the number of the second stationary vanes 39 is 3 to 7. In the airflow flowing direction, the guide cone 38 has an open upstream end (rear end) and a closed downstream end (front end). The upstream end of the guide cone 38 is connected to a front end of the inner guide cover 34. In the airflow incoming direction, the guide cone 38 has a flow guide surface configured for guiding the airflow to flow towards the air outlet 22 during rotation of the fan 50, and the flow guide surface may be partially or fully shaped as an elliptic paraboloid, an elliptic cone, a circular conical surface, and the like, which is not limited herein. The downstream end of the guide cone 38 is further provided with heat dissipation holes. The heat dissipation holes communicate with an opening in the front end of the inner guide cover 34. When the blowing function is performed, cooling airflow flows into the guide cone 38 through the opening of the inner guide cover 34 and flows out of the heat dissipation holes of the guide cone 38, so as to cool the motor.

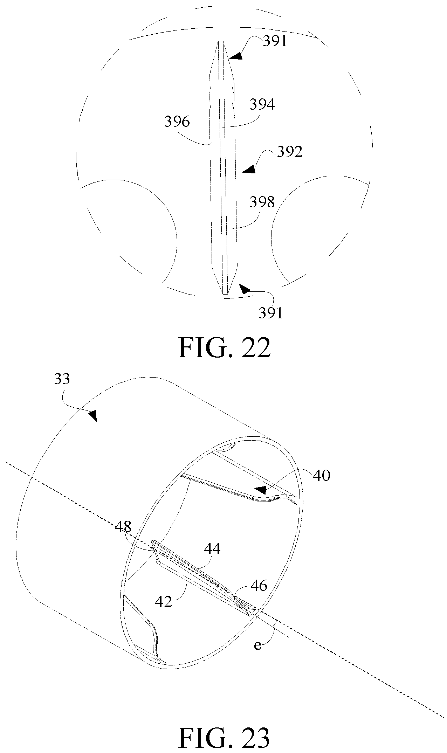

In some embodiments, referring to FIG. 22, the second stationary vanes 39 are integrally formed on the guide cone 38. Specifically, the second stationary vane 39 includes a first inner side edge 392 connected to the guide cone 38, a first outer side edge 394 opposite to the first inner side edge 392 and connected with the first inner side edge 392, and an intersection point located at a joint of the first inner side edge 392 and the first outer side edge 394. The first inner side edge 392 extends on the outer wall of the guide cone 38 in the direction of the fan axis 51, and the first outer side edge 394 extends in the direction of the fan axis 51 and is in an arc shape convex outwards. Referring to FIG. 22, in some specific embodiments, the second stationary vane 39 further includes a first guide surface 396 and a second guide surface 398 which extend between the first inner side edge 392 and the first outer side edge 394 and are oppositely arranged. The first outer side edge 394 can disperse the airflow and guide the airflow to flow to the first guide surface 396 and the second guide surface 398, such that the airflow can roughly flow in the direction of the fan axis 51, thereby reducing the rotation vortex and the noise.

It is to be understood that in some other embodiments, the second stationary vanes 39 may also be detachably connected with the guide cone 38, which is not limited herein.

Further, referring to FIG. 20, a width of the second stationary vane 39 is linearly reduced from the first inner side edge 392 to the first outer side edge 394. It is to be understood that to ensure connection reliability between the second stationary vane 39 and the guide cone 38, a width of the first inner side edge 392 should be kept at a certain value, so as to increase a connection area with the guide cone 38. The first outer side edge 394 may have the function of dispersing the airflow, such that a width of the first outer side edge 394 should be smaller than the width of the first inner side edge 392. Thus, the first guide surface 396 and the second guide surface 398 connecting the first inner side edge 392 and the first outer side edge 394 are constructed to oppositely expand and tilt, such that a distance between the first guide surface 396 and the second guide surface 398, namely the width of the second stationary vane 39 is linearly reduced from the first inner side edge 392 to the first outer side edge 394. Thus, the first guide surface 396 and the second guide surface 398 may further make the pressure gradient at the first outer side edge 394 and the first inner side edge 392 be in smooth transition and changing, thereby reducing vortex in the airflow, reducing the tendency of separation of the airflow from the second stationary vane 39, and minimizing the noise. As a preferred implementation, the first guide surface 396 and the second guide surface 398 are symmetrically arranged, which can further improve the rectification performance of the second stationary vane 39.

Further, referring to FIG. 21, the second stationary vane 39 includes two tail end parts respectively adjacent to corresponding intersection points, and a middle part located between the two tail end parts. A width of the middle part at the same cross section is kept unchanged, and a width of the tail end parts at the same cross section is gradually increased from the intersection points to the middle part. Specifically, in the direction of the fan axis 51, the first inner side edge 392 and a second outer side edge 44 have a first intersection point and a second intersection point which are spaced from each other. The second stationary vane 39 includes a middle part located at a middle position, and a first tail end part 391 and a second tail end part 393 which link the middle part, and with the first intersection point and the second intersection point. The width of the middle part at the same cross section is kept unchanged, and the width of the first tail end part 391 and the second tail end part 393 at the same cross section is gradually increased from the intersection points to the middle part. In other words, the second stationary vane 39 is constructed into a structure of "small at two ends and large in middle" in the direction of the fan axis 51. As shown in FIG. 21 and FIG. 22, by observing in the direction of the fan axis 51, the first tail end part 391 and the second tail end part 393 are tip-shaped, and the width is gradually reduced from the middle part to the first intersection point and the second intersection point. Thus, the first tail end part 391 facilitates airflow dispersing, and reduces vortex noise, and the second tail end part 393 can avoid the tendency of separation of the airflow from the second stationary vane 39, thereby avoiding generation of separation noise.

In some embodiments, referring to FIG. 19 and FIG. 20, a length of the second stationary vane 39 is L3, a chord length of the first stationary vane 36 is L4, and 0.2≤L3:L4≤1. The length of the second stationary vane 39 is defined as the size of the second stationary vane 39 in the airflow flowing direction, namely the direction of the fan axis 51. The inventors found through researches that the second stationary vane 39 is configured for further guiding the airflow to flow in the direction of the fan axis 51 by arranging the second stationary vane 39, the rotation angle of the airflow generated during rotation of the fan 50 is reduced, the rotation vortex in the airflow is reduced, and therefore, the noise is reduced. Thus, the rectification and noise reduction performance of the second stationary vane 39 is correlated to the chord length of the first stationary vane 36, and further researches show that by setting the length of the second stationary vane 39 to be 0.2 to 1 time of the chord length of the first stationary vane 36, on the premise of ensuring good rectification performance, the vortex in the airflow is significantly reduced, which correspondingly leads to a significant decrease in the decibel level the noise, and improves the user experience.

In some embodiments, referring to FIG. 20, an inlet installation angle of the second stationary vane 39 is d, and 0°≤d≤15°. The inlet installation angle of the second stationary vane 39 is defined as an included angle between a tangent line at a mid-arc surface of the second stationary vane 39 and the fan axis 51 of the fan 50. The definition of the mid-arc surface of the second stationary vane 39 may be referred to the above manner for determining the mid-arc line of the fan blade 54, which is not repeated herein. As mentioned above, when the blade inlet installation angle is too large, the inlet impact loss is increased, the blade inlet flow condition is not good, and vortex noise is increased. However, when the blade inlet installation angle is reduced, the sound pressure level of inlet noise is gradually reduced, but as further decrease in the inlet installation angle, the inlet separation loss of the inlet installation angle is increased, and the vortex noise is increased as well. The second stationary vane 39 is configured for further guiding the airflow to flow in the direction of the fan axis 51, such that by setting the inlet installation angle of the second stationary vane 39 to be at 0° to 15°, the airflow flow condition can be further ensured, and the vortex noise is reduced, thereby reducing the overall noise influence and improving the user experience.

In some embodiments, referring to FIG. 1 and FIG. 23, a garden tool 100 with a blowing function includes: a housing 10, a blowing tube 20, a duct 30, a fan 50, and a motor. The blowing tube 20 is connected with the housing 10, and air may be blown out from the blowing tube 20. The duct 30 is connected to the housing 10, and configured for guiding air to flow. The fan 50 rotates around a fan axis 51 to make the air flow. The motor drives the fan 50 to rotate around the fan axis 51. The duct 30 includes an outer guide cover 32, an inner guide cover 34, and first stationary vanes 36 located between the outer guide cover 32 and the inner guide cover 34. The garden tool 100 further includes third stationary vanes 40 located downstream of the first stationary vanes 36 in an airflow direction.

According to the garden tool 100 with a blowing function, the third stationary vanes 40 are arranged downstream of the first stationary vanes 36, and after airflow rectified by the first stationary vanes 36 is guided by the third stationary vanes 40, the airflow basically becomes parallel airflow flowing in the direction of the fan axis 51, thereby avoiding the high-pitched noise generated by the rotational impact of the airflow in the air channel portion 12 and the blowing tube 20, and further improving the noise reduction effect.

Although not expected to be limited by the theory, after rectification through the first stationary vanes 36 and the second stationary vanes 39, the decibel level of noise of the garden tool 100 with a blowing function is significantly reduced. In order to achieve the purpose of lower noise, referring to FIG. 23 to FIG. 25, in some embodiments, the garden tool 100 with a blowing function further includes third stationary vanes 40 located downstream of the second stationary vanes 39 in the airflow flowing direction. The third stationary vanes 40 are in a flat plate shape, roughly extend in the direction of the fan axis 51, and are arranged at equal intervals in the circumferential direction. Researches show that after airflow rectified by the second stationary vanes 39 is guided by the third stationary vanes 40, the airflow basically becomes parallel airflow flowing in the direction of the fan axis 51, thereby avoiding the high-pitched noise generated by the rotational impact of the airflow in the air channel portion 12 and the blowing tube 20. Specifically, the garden tool 100 with a blowing function further includes a connecting cylinder 33. The number of the third stationary vanes 40 is 3 to 11. The third stationary vanes 40 are arranged on an inner wall of the connecting cylinder 33 in the circumferential direction. The connecting cylinder 33 is connected to the housing 10 or the blowing tube 20, and more specifically, the connecting cylinder 33 may be located at a connected region of the blowing tube 20 and the housing 10. In some specific embodiments, the third stationary vane 40 includes a second front side edge 46, a second rear side edge 48, a second inner side edge 42 connected to the connecting cylinder 33, a second outer side edge 44 opposite to the second inner side edge 42, and a blade end (not shown in the figure) located at a joint of the second outer side edge 44 and the second rear side edge 48. It is to be understood that in some other embodiments, it is possible to only arrange the first stationary vanes 36 and the third stationary vanes 40 without the second stationary vanes 39, which is not limited herein.

In some embodiments, referring to FIG. 1 and FIG. 19, a distance between the third stationary vane 40 and the first stationary vane 36 is L5, and a chord length of the first stationary vane 36 is L4, where 2≤L5:L4≤4. The distance between the third stationary vane 40 and the first stationary vane 36 refers to a distance between the third stationary vane 40 and the first stationary vane 36 in the airflow flowing direction, namely the direction of the fan axis 51, and specifically refers to a distance between the second front side edge 46 of the third stationary vane 40 and the first stationary vane 36. It is to be understood that the third stationary vane 40 has a main function that after airflow is guided by the third stationary vane 40, the airflow basically becomes parallel airflow flowing in the direction of the fan axis 51, and thus, the distance between the third stationary vane 40 and the first stationary vane 36 may affect the rectification effect. The inventors found through researches that if the third stationary vane 40 is too close to the first stationary vane 36, the airflow rectified by the third stationary vane 40 is not parallel airflow basically flowing in the direction of the fan axis 51; and if the third stationary vane 40 is too far away from the first stationary vane 36, on one hand, the length of the housing 10 will be increased, which cannot satisfy downsizing and lightweight design requirements, and on the other hand, compared with no arrangement of the third stationary vane 40, the noise is not significantly reduced. In one of embodiments, the distance between the third stationary vane 40 and the first stationary vane 36 is set to be 2 to 4 times of the chord length of the first stationary vane 36, which achieves a significant noise reduction effect while ensuring a good rectification effect.

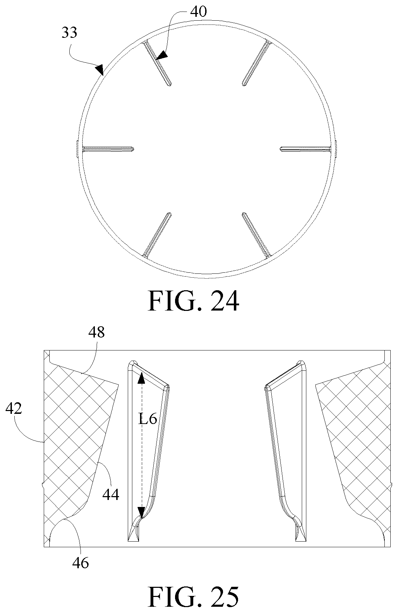

In some embodiments, referring to FIG. 19 and FIG. 25, a length of the third stationary vane 40 is L6, and the chord length of the first stationary vane 36 is L4, where 0.5≤ L6:L4≤2. The length of the third stationary vane 40 is defined as the size of the third stationary vane 40 in the direction of the fan axis 51. The inventors found through researches that the third stationary vane 40 is too long, which is not conducive to achieving the design requirements of downsizing and lightweight, and in addition, cannot achieve significant noise reduction. Thus, in this embodiment of this application, the length of the third stationary vane 40 is set to be 0.5 to 2 times of the chord length of the first stationary vane 36, which can ensure good rectification performance and reduce noise without greatly increasing the mass.

In some embodiments, referring to FIG. 23, an inlet installation angle of the third stationary vanes 40 is e, where 0°≤e≤15° It is to be understood that the third stationary vane 40 is configured for further guiding the airflow to flow in the direction of the fan axis 51, such that by setting the inlet installation angle of the third stationary vane 40 to be at 0° to 15°, the airflow flow condition can be further ensured, and the vortex noise is reduced, thereby reducing the overall noise influence and improving the user experience. In addition, the inlet installation angle e of the third stationary vane 40 may be understood as an included angle between a tangent line at a mid-arc surface between two opposite side surfaces of the third stationary vane 40 and the fan axis 51, and a specific representation manner may be referred to the above manner for determining the mid-arc line of the fan blade 54.

In some embodiments, referring to FIG. 23, the second outer side edge 44 expands and obliquely extends relative to the fan axis 51 in the airflow flowing direction, the second front side edge 46 concavely bends and extends relative to the fan axis 51, and in a specific implementation, a longitudinal section of the second front side edge 46 is in an arc shape and is in smooth transition with the second outer side edge 44. Thus, the airflow guided by the second stationary vane 39 firstly makes contact with the second front side edge 46, and the second front side edge 46 concavely bends and extends, which is conducive to gradient smooth transition of the speed difference of the airflow at different radial size positions, thereby reducing vortex noise. The second outer side edge 44 expands and obliquely extends relative to the fan axis 51, which is conducive to further reducing the speed difference of the airflow at different radial size positions to achieve gradient smooth transition, and the airflow is further guided to basically become the parallel airflow flowing in the direction of the fan axis 51.

The inventors of this application verify through tests that by adopting the plurality of stationary vanes for flow guiding, the decibel level of the noise can be reduced by 1 to 3 decibels, and the high-pitched noise can be reduced by 2 to 5 decibels, and the air channel efficiency of the air channel portion 12 is improved by 2%.

In some embodiments, referring to FIG. 1, FIG. 26, and FIG. 30, a garden tool 100 with a blowing function includes: a housing 10, a fan 50, and an air intake shield 60. The housing 10 is provided with an air inlet 11. The fan 50 rotates around a fan axis 51 to make the air flow. The motor drives the fan 50 to rotate around the fan axis 51. The air intake shield 60 is connected to the air inlet 11, and the fan 50 can rotate around the fan axis 51 and introduce, by the air intake shield 60, external air from the air inlet 11. The air intake shield 60 includes a three-dimensional air inlet array grid with an outward convex outer envelope surface. The three-dimensional air inlet array grid includes a web 61 extending in a first direction 612, there are a plurality of webs, and the plurality of webs 61 are arranged in a second direction 661 at intervals; and a flow-breaking rib 66 extending in the second direction 661, there are a plurality of flow-breaking ribs, and each flow-breaking rib 66 is in lap joint to two adjacent webs 61 in the second direction 661. A plurality of grid units 62 arranged at intervals are defined by the plurality of flow-breaking ribs 66 and the plurality of webs 61, and air inlet holes 621 for airflow to penetrate through are formed between adjacent grid units 62. Ejection portions 68 of the plurality of flow-breaking ribs 66 protrude relative to the webs 61 in a direction away from the air inlet 11 to form the outward convex outer envelope surface of the three-dimensional air inlet array grid. The first direction 612 intersects with the second direction 661.

According to the garden tool 100 with a blowing function, the three-dimensional air inlet array grid is designed to have the outward convex arc envelope surface. Outer envelope surfaces and/or inner envelope surfaces of the plurality of grid units 62 are in smooth transition, which can reduce flow losses of the airflow to the maximum degree, meanwhile, intake airflow may tend to be uniform through the plurality of grid units 62 arranged towards the periphery from a center of the air intake shield 60, such that roughly parallel intake airflow is generated, and rotational flow generated at frameworks of the different grid units 62 may offset with each other. Accordingly, on one hand, fluctuation of the airflow in space can be weakened without increasing the number of the grid units 62, and the airflow entering the air intake shield 60 tends to be parallel, thereby reducing the generation of vortex and then reducing the noise. On the other hand, air flowing and efficiency can be improved, and the air inlet efficiency is improved. In addition, as the ejection portions 68 of the flow-breaking ribs 66 protrude relative to the webs 61 in the direction away from the air inlet 11, in other words, at least part of the ejection portions 68 protrude from the webs 61, when the airflow enters the grid units 62, the airflow is stopped by two adjacent ejection portions 68 and then divided towards the periphery; and after flow division, the airflow is then stopped by two adjacent webs 61, such that the airflow can be prevented from being stopped by the two adjacent webs 61 and the two adjacent ejection portions 68 at the same time, thereby effectively increasing the intake air flow and reducing air resistance.

It should be noted that the ejection portion 68 may be of a plane structure. For example, the ejection portion 68 may be a complete plane, or is formed by splicing a plurality of planes with included angles therebetween, or may be an arch-shaped or curved cambered surface, and the like. Of course, the ejection portion 68 may also be of a point or linear structure. For example, the ejection portion 68 is an end point of a circular cone; or may be an included angle line formed by intersecting two side surfaces of the ejection portion 68; or the like.

Referring to FIG. 1, FIG. 30, and FIG. 31, in one of embodiments, the garden tool 100 with a blowing function further includes the air intake shield 60. The air intake shield 60 is connected with the air inlet 11 of the air channel portion 12; the motor can drive the fan 50 to rotate around the fan axis 51 to introduce, through the air intake shield 60, the external air from the air inlet 11; and an airflow channel for air to flow is formed between the air intake shield 60 and the air outlet 22. To facilitate the cleaning of the air channel portion 12, the air intake shield 60 and the air inlet 11 may be configured to be detachably connected. It is to be understood that the air intake shield 60 has one function of preventing fingers of the user from stretching into the air channel portion 12 to cause danger, and has another function of preventing, for example, leaves or debris from entering the air channel portion 12 during cleaning work to cause faults of the motor and the fan 50. In some specific embodiments, the air intake shield 60 includes a plurality of grid units 62 for the airflow to pass through. The air enters the air inlet 11 of the air channel portion 12 from the plurality of grid units 62, and an effective total ventilation area of the air intake shield 60 is defined by a sum of ventilation areas of the plurality of grid units 62. In other words, the effective total ventilation area of the air intake shield 60 may be understood as a sum of projected areas of the grid units 62 in a plane perpendicular to the axis of the air inlet 11. As a specific implementation, a maximum hole diameter of the grid unit 62 is not greater than 7 mm, and preferably, the maximum hole diameter of the grid unit 62 is not greater than 4 mm. Thus, the human body can be protected, and meanwhile the debris can be prevented from entering the air inlet 11.

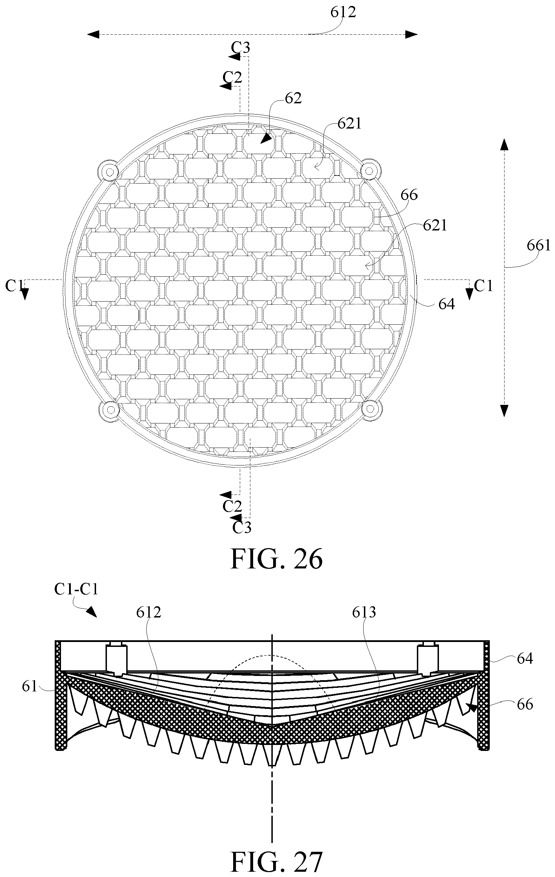

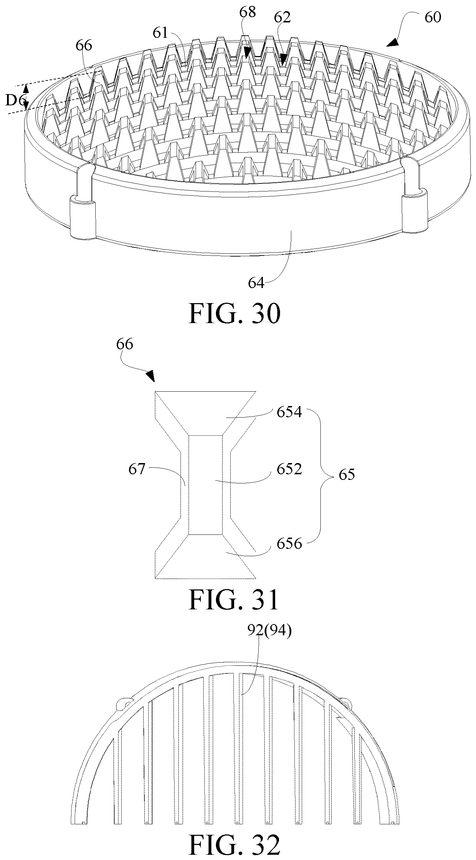

Further, referring to FIG. 30, the air intake shield 60 includes a three-dimensional air inlet array grid and a frame 64, and the frame 64 surrounds the three-dimensional air inlet array grid, and is connected to the air inlet 11 of the housing 10 through the frame 64. The three-dimensional air inlet array grid includes a plurality of grid units 62, and has an outward convex arc outer envelope surface, for example, the envelope surface may be a spherical surface. Further, the three-dimensional air inlet array grid has an outward convex arc inner envelope surface. It should be noted that the envelope surface refers to an equiphase surface which is a track consisting of in-phase points with geometric positions that can always be found in the wave propagation process. The inventors found through researches that air is sucked in through the air intake shield 60 and the air inlet 11 due to rotation of the fan 50, and before the air passes through the air intake shield 60, the air has a small speed component or has no speed component in the circumferential direction relative to the axis direction of the air inlet 11, and due to the arrangement of the grid units 62, airflow passing through the air intake shield 60 generates a speed component in the circumferential direction, resulting in the generation of vortex, which in turn produces vortex noise. In order to reduce fluctuation of the airflow in space, a narrow air channel (grid unit 62) is required to divide the airflow into a plurality of strands of smaller airflow, which will increase the resistance of air flowing and affect the intake volume, and meanwhile will also increase the mass of the air intake shield 60 and produce more noise. In order to solve the problems, the inventors further found that by designing the three-dimensional air inlet array grid as having the outward convex arc envelope surface, such as spherical outer envelope surfaces shown in FIG. 26 and FIG. 30, and making outer envelope surfaces and/or inner envelope surfaces of the plurality of grid units 62 in smooth transition, on one hand, flow losses of the airflow can be reduced to the maximum degree, and on the other hand, intake airflow may tend to be uniform through the plurality of grid units 62 arranged towards the periphery from the center of the air intake shield 60, such that roughly parallel intake airflow is generated, and rotational flow generated at frameworks of the different grid units 62 may offset with each other. Accordingly, on one hand, fluctuation of the airflow in space can be weakened without increasing the number of the grid units 62, and the airflow entering the air intake shield 60 tends to be parallel, thereby reducing the generation of vortex and then reducing the noise. On the other hand, air flowing and efficiency can be improved, and the air inlet efficiency is improved. In some embodiments, referring to FIG. 1, the flow-breaking rib 66 includes a first air guide portion 681 and a second air guide portion 682, wherein the first air guide portion 681 and the second air guide portion 682 extend towards the adjacent spaced webs 61 from the ejection portion 68. A preset distance D6 of the leeward side of the ejection portion 68 protruding outward relative to the web 61 is 2 mm to 20 mm. When a height distance between the ejection portion 68 and the web 61 is too small, the ejection portion 68 and the web 61 cannot be spatially staggered in the airflow flowing direction, resulting in that the airflow is stopped by both the flow-breaking rib 66 and the web 61, which leads to excessive air resistance, and the intake volume is reduced. When the height distance between the ejection portion 68 and the web 61 is too large, the overall length of the garden tool 100 will be too large; and meanwhile, noise inside the blower cannot be blocked, and as a result, outward diffusion of the noise cannot be delayed. Thus, the height distance D6 is controlled to be within 2 mm to 20 mm in one of embodiments, which can not only ensure staggered airflow stop and an increase in the intake volume, but also block the noise in the blower to delay outward diffusion of the noise.

In addition, in some specific embodiments, the first air guide portion 681 and the second air guide portion 682, wherein the first air guide portion 681 and the second air guide portion 682 extend towards the adjacent spaced webs 61 are respectively of structures located on two opposite sides of the ejection portion 68 in the second direction 661 and obliquely extending towards the webs 61, such that the airflow can be guided according to a preset path, and rotational flow is avoided, thereby reducing the noise.

It should be noted that the height distance D6 may be 2 mm, 3 mm, 5 mm, 8 mm, 11 mm, 14 mm, 17 mm, 20 mm, and the like. In some specific embodiments, the height distance D6 is preferably 3 mm to 8 mm.

In some embodiments, referring to FIG. 26, the three-dimensional air inlet array grid has the plurality of grid units 62 arranged at intervals. A projection of each grid unit 62 in the plane perpendicular to the axis of the air inlet 11 has a regular and/or irregular shape. Specifically, the three-dimensional air inlet array grid is provided with a main air inlet region and auxiliary air inlet regions surrounding the frame 64. Projections of the grid units 62 located in the main air inlet region in the plane perpendicular to the axis of the air inlet 11 are the same in shape. Thus, the grid units 62 located in the auxiliary air inlet regions can be connected with the frame 64. In some specific embodiments, the projection of each grid unit 62 in the plane perpendicular to the central axis of the air inlet 11 is in a polygon shape, such as hexagon, heptagon, or octagon. It is to be understood that a maximum grid width of the grid unit 62 is determined by a maximum inscribed spherical radius of the grid unit 62. Typically, the grid unit 62 has a small grid width, which facilitates noise reduction. By adopting the polygonal grid unit 62, the maximum grid width of the grid unit 62 can be controlled, which is conducive to noise control.

It should be noted that the auxiliary air inlet regions should be understood as a plurality of spaces surrounding outside the main air inlet region at intervals, which are formed between the three-dimensional air inlet array grid and an inner wall of the frame 64 when the three-dimensional air inlet array grid is connected inside the frame 64, in other words, the spaces are defined by the non-closed "grid units 62" and the inner wall of the frame 64. The main air inlet region is a space formed by combining the plurality of completely closed "grid units 62".

In some embodiments, the plurality of grid units 62 are arranged into a plurality of rows at intervals in the second direction 661. The grid units 62 in each row are arranged in the first direction 612. The two most adjacent three-dimensional air inlet array grids in adjacent rows are staggered in the first direction 612. The first direction 612 intersects with the second direction 661. Specifically, the first direction 612 is a transverse direction shown in FIG. 26, and the second direction 661 is a longitudinal direction shown in FIG. 26. Thus, the grid units 62 in different rows can be staggered, thereby avoiding the generation of vortex as much as possible, and then reducing the noise.

In some embodiments, referring to FIG. 26, the three-dimensional air inlet array grid includes a web 61 extending in the first direction 612 and a flow-breaking rib 66 extending in the second direction 661. There are a plurality of webs, and the plurality of webs 61 are arranged at intervals in the second direction 661. There area plurality of flow-breaking ribs, and each flow-breaking rib 66 is in lap joint to two adjacent webs 61 in the second direction 661. The flow-breaking rib 66 is constructed into an airflow channel through which two adjacent grid units 62 are in communication in the first direction 612. The plurality of grid units 62 arranged at intervals are defined by the plurality of flow-breaking ribs 66 and the plurality of webs 61. Top surfaces 652 of the plurality of flow-breaking ribs 66 form the outward convex arc outer envelope surface of the three-dimensional air inlet array grid, and inner surfaces of the plurality of webs 61 form the outward convex arc inner envelope surface of the three-dimensional air inlet array grid. Thus, on one hand, the flow-breaking ribs 66 are configured for dividing the airflow, such that a plurality of strands of smaller airflow can pass through the grid units 62 to form roughly parallel airflow, thereby reducing the noise. On the other hand, by observing the air intake shield 60 along the axis parallel to the air inlet 11, the flow-breaking ribs 66 and the webs 61 are almost not overlapped, which facilitates manufacturing of the air intake shield 60, for example, injection molding is adopted, thereby facilitating demolding. Further, the flow-breaking rib 66 has the airflow channel making the two adjacent grid units 62 communicate, which is conducive to improving the intake volume without increasing the noise.

In some embodiments, the ejection portion 68 has a top surface 652 on the windward side 65. The first air guide portion 681 and the second air guide portion 682 are respectively a first air guide surface 654 and a second air guide surface 656 on the windward side 65. As an implementation, the webs 61 are basically parallel to the axis of the air inlet 11, which is conducive to guiding the airflow. A thickness of the web 61 is 0.25 mm to 2 mm.

Referring to FIG. 31, specifically, the top surface 652 is perpendicular to the axis of the air inlet 11; and included angles between projections of the first air guide surface 654 and the second air guide surface 656 in a plane perpendicular to the first direction 612 and a projection of the top surface 652 in the plane perpendicular to the first direction 612 are both De, where 90°≤De≤180°. In a specific embodiment, a section profile of the windward side 65 of the flow-breaking rib 66 in the second direction 661 is trapezoid, and a section profile of the leeward side is also trapezoid. Preferably, the width of the top surface 652 is smaller than that of the first air guide surface 654 and the second air guide surface 656. For example, in some implementations, the width of the first air guide surface 654 is gradually increased from the top surface 652 to the web 61 direction, and a projection of the flow-breaking rib 66 in the plane perpendicular to the axis of the air inlet 11 is in a dumbbell shape. Thus, the flow-breaking rib 66 firstly makes contact with the airflow and the width thereof is narrow enough to divide the airflow. The first air guide surface 654 and the second air guide surface 656 are wider and obliquely extend. The first air guide surface 654 and the second air guide surface 656 are configured for guiding the airflow along a preset path, thereby avoiding the generation of rotational flow and reducing the noise.

Further, referring to FIG. 26, in some embodiments, the two adjacent flow-breaking ribs 66 in adjacent rows are staggered at equal intervals in the first direction 612. For example, two grid units 62 in adjacent rows are staggered in the first direction 612, and two adjacent grid units 62 in an even row and an odd row are located in the same column in the second direction 661. It is to be understood that in this embodiment, the flow-breaking ribs 66 can separate different grid units 62. Two adjacent grid units 62 in adjacent rows are staggered, and two adjacent grid units 62 in the even row and the odd row are located in the same column, which are both implemented by the arrangement of the flow-breaking ribs 66, representing regular arrangement of the flow-breaking ribs 66. The first air guide surface 654 and the second air guide surface 656 can guide the airflow into the two same-column grid units 62 in the even row and the odd row, thereby avoiding interference between airflow, and reducing the noise.

In some embodiments, referring to FIG. 31, the windward side 65 further includes third air guide surfaces 67 located on two opposite sides of the flow-breaking rib 66 in the first direction 612. The third air guide surfaces 67 are connected to the top surface 652, the first air guide surface 654, and the second air guide surface 656, and obliquely extend outwards in the first direction 612. Accordingly, the flow-breaking rib 66 forms the air guide surfaces in both the first direction 612 and the second direction 661, such that the airflow can be guided into different grid units 62 in the first direction 612 and/or the second direction 661, thereby avoiding rotational flow generated by the airflow, and further reducing the noise.

The inventors of this application verify through tests that by adopting the above air intake shield 60, the decibel level of the noise can be reduced by 1 to 2 decibels, the high-pitched noise can be reduced by 1 decibel, and the air channel efficiency of the air channel portion 12 is improved by 1% to 2%.

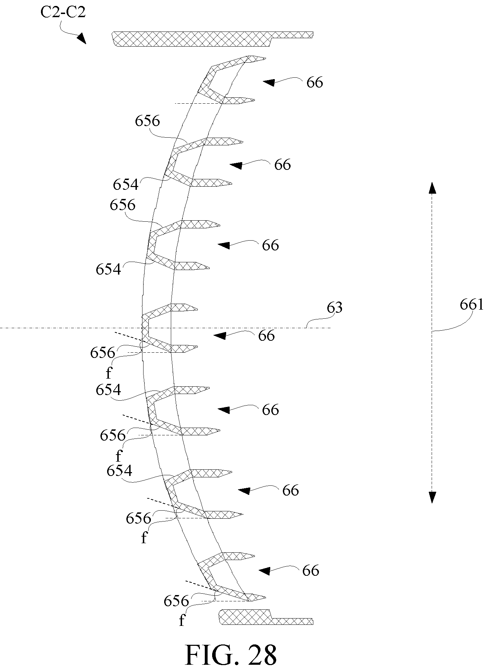

In some embodiments, referring to FIG. 28, the air intake shield 60 has a shield axis 63. The first air guide surface 654 is arranged facing the shield axis 63 relative to the second air guide surface 656. An included angle between the second air guide surfaces 656 of the flow-breaking ribs 66 in the same column in the second direction 661 and the shield axis 63 is f, and is gradually increased from the edge of the three-dimensional air inlet array grid to the shield axis 63. For example, taking four flow-breaking ribs 66 located in the same column and on one side of the shield axis 63 as an example, the included angle f may be sequentially 17°, 19°, 20°, and 21° from the edge of the three-dimensional air inlet array grid to the shield axis 63. It can be inferred that the closer to the middle of the air intake shield 60, the greater the inclination angle of the second air guide surface 656, which can disperse intake air to the periphery of the air intake shield 60, resulting in uniform intake air and avoiding concentrated air intake in the middle of the air intake shield 60.

Of course, in some other embodiments, the included angle f between the second air guide surfaces 656 of the flow-breaking ribs 66 in the same column in the second direction 661 and the shield axis 63 may be kept unchanged from the edge of the three-dimensional air inlet array grid to the shield axis 63.

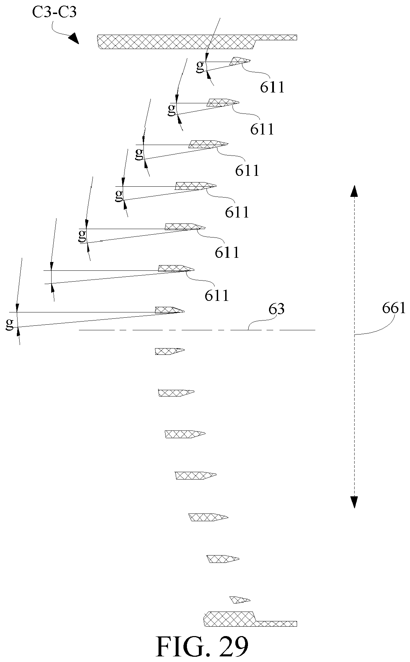

In some embodiments, referring to FIG. 29, the air intake shield 60 has a shield axis 63. The web 61 includes an inner surface away from intake air, and fourth air guide surfaces 611 which are located on two opposite sides of the inner surface in the second direction 661 and obliquely extend relative to the inner surface. A distance between the fourth air guide surfaces 611 between two adjacent webs 61 is gradually increased from the end, away from the inner surface, of the fourth air guide surface 611 to the end, close to the inner surface, of the fourth air guide surface 611, forming an expansion structure towards the interior of the housing 10. Thus, when the airflow flows to the fourth air guide surfaces 611, the airflow is diffused outwards under the action of the fourth air guide surfaces 611, such that airflow distribution is more uniform and stable.

An included angle g between the fourth air guide surface 611 of the web 61 facing away from the shield axis 63 and the shield axis 63 is gradually reduced from the edge of the three-dimensional air inlet array grid to the shield axis 63 in the second direction 661. Of course, in some other embodiments, the included angle g may also be kept unchanged from the edge of the three-dimensional air inlet array grid to the shield axis 63 in the second direction 661.

In some embodiments, referring to FIG. 26, a distance between two adjacent webs 61 is 5 mm to 15 mm. When the distance between the two adjacent webs 61 is too small, an effective air intake area of the air intake shield 60 will be reduced, resulting in decrease in intake volume; and when a gap between the two adjacent webs 61 is too large, protection cannot be realized. Thus, the distance between the webs 61 is controlled to be 5 mm to 15 mm, which can ensure the intake volume, reduce the generation of vortex, and improve the noise reduction effect on the premise of realizing effective protection.

It should be noted that the distance between the adjacent webs 61 may be 5 mm, 7 mm, 9 mm, 11 mm, 13 mm, 15 mm, and the like.

In some embodiments, referring to FIG. 27, one side surface of the web 61 facing away from intake air in the first direction 612 at least includes a first surface 613 and a second surface 614 intersected with each other. An included angle between the first surface 613 and the second surface 614 is 140° to 180°. The first surface 613 and the second surface 614 may be both planes or curved surfaces. When the first surface 613 and the second surface 614 are both the curved surfaces, a tangent line may be drawn by taking one point on each of the first surface 613 and the second surface 614, and the two tangent lines may be understood as an included angle between the first surface 613 and the second surface 614. How to select points on the first surface 613 and the second surface 614 is not limited. For example, one point may be selected at one end of the first surface 613 away from the second surface 614; one point may be selected at a middle of the first surface 613; or one point may be selected at one end of the first surface 613 close to the second surface 614.

Optionally, one side surface of the web 61 facing the intake air may be a curved surface, or may also be formed by splicing a plurality of planes with included angles therebetween.

In some embodiments, referring to FIG. 30, the air intake shield 60 further includes the frame 64 connected to the air inlet 11, and the three-dimensional air inlet array grid is connected to the inside of the frame 64. There may be multiple manners to connect the three-dimensional air inlet array grid to the frame 64. For example, the manners of connecting the three-dimensional air inlet array grid to the frame 64 may be but not limited to bolted connection, snap fit, riveting, welding, integrated forming, and the like.

Further, the outer envelope surface of the three-dimensional air inlet array grid protrudes out of one end surface of the frame 64 facing away from the air inlet 11. Thus, the outer envelope surface protrudes out of the frame 64, which is conducive to increasing the structure strength, and limiting the noise radiation.

In addition, in some embodiments, the air intake shield 60 has a shield axis 63. One end surface of the frame 64 facing away from the air inlet 11 inclines relative to the shield axis 63.

In some embodiments, referring to FIG. 1, a garden tool 100 with a blowing function includes: a housing 10, a fan 50, and an air intake shield 60. The housing 10 is provided with an air inlet 11. The fan 50 rotates around a fan axis 51 to make the air flow. The motor drives the fan 50 to rotate around the fan axis 51. The air intake shield 60 is connected to the air inlet 11, and the fan 50 can rotate around the fan axis 51 and introduce, by the air intake shield 60, external air from the air inlet 11. The garden tool 100 further includes a plurality of guide vanes 90 arranged at an upstream region of the fan 50, and airflow introduced from the air inlet 11 may pass through gaps between the guide vanes 90, so as to be guided into parallel airflow.

According to the garden tool 100 with a blowing function, in order to further reduce the noise, the inventors found through researches that air is sucked in through the air intake shield 60 and the air inlet 11 during rotation of the fan 50, airflow passes through the air intake shield 60 and generates roughly parallel intake airflow, but there is still non-parallel airflow, which causes vortex. In order to solve the problems, referring to FIG. 1 and FIG. 32, in some embodiments, the garden tool 100 with a blowing function further includes the plurality of guide vanes 90 arranged at the upstream region of the fan 50 close to the air inlet 11, and the airflow introduced from the air inlet 11 may pass through the gaps between the guide vanes 90, so as to be guided into the parallel airflow. Specifically, the plurality of guide vanes 90 extend in parallel roughly in the axis direction of the air inlet 11, and the plurality of guide vanes 90 are basically arranged at equal intervals, so as to better guide the airflow to make the airflow become the parallel airflow after passing through the guide vanes 90, such that the frequency of the airflow impacting the inner wall of the air channel portion 12 is reduced, and noise reduction is achieved. The non-parallel airflow has refraction losses between the guide vanes 90, so as to reduce the noise, and thus, the guide vanes 90 may also be used as sound barriers. It is to be understood that after passing through the fan 50, the airflow becomes high-speed airflow while the airflow at the upstream region of the air channel portion 12 is at low speed relative to the downstream region, and thus the noise generated by refraction collisions of the non-parallel airflow between the guide vanes 90 is relatively low, which cannot affect the overall noise of the garden tool 100 with a blowing function, which indicates that a good noise reduction effect can be achieved by arranging the guide vanes 90.

In some specific implementations, a distance between the guide vane 90 and the air inlet 11 is 10 mm to 50 mm; the number of the guide vanes 90 is 5 to 20; a distance between every two adjacent guide vanes 90 is 12 mm to 18 mm; and a chord length of each guide vane 90 is 10 mm to 50 mm. As a preferred implementation, the distance between the adjacent guide vanes 90 is 15 mm, which can achieve a good noise reduction effect.

Further, referring to FIG. 1, the housing 10 includes a straight section 13 and a bending section 14 located upstream of the straight section 13 and bending downwards relative to the straight section 13. The fan 50 is arranged at the straight section 13, and the guide vanes 90 are arranged at the bending section 14 and extend along an inner wall of the bending section 14. Specifically, the straight section 13 is roughly parallel to the fan axis 51; a front end of the bending section 14 is connected with a rear end of the straight section 13; a rear end of the bending section 14 is provided with the foregoing air inlet 11; and the air intake shield 60 is connected to the air inlet 11. An included angle between the fan axis 51 and a vertical line perpendicular to a plane where the air inlet 11 is located is set to be within 120° to 180°. Accordingly, a flow path of the airflow can be lengthened by arranging the bending section 14, good flow guidance is performed by the bending inner wall of the bending section 14 and the guide vanes 90, such that the airflow reaching the fan 50 is roughly parallel airflow, which is conducive to reducing the noise. Specifically, the housing 10 includes a first half housing and a second half housing which are symmetrically arranged relative to a symmetric reference plane. The first half housing and the second half housing are provided with matched upper edges and lower edges. The upper edges of the first half housing and the second half housing are adaptively connected, and the lower edges of the first half housing and the second half housing are adaptively connected, thereby forming the foregoing airflow channel. In some specific embodiments, a cross section of the housing 10 is in a circular shape, such that profiles of cross sections of the first half housing and the second half housing are two symmetrically-arranged half arcs, and edges of the first half housing and the second half housing on the two sides in the radial direction are the foregoing upper edges and lower edges respectively.

Further, the fan axis 51 is located on the symmetric reference plane. Projections of parts, located on the bending section 14, of the upper edge of the first half housing and the upper edge of the second half housing towards the symmetric reference plane are overlapped and have a third curved profile, and projections of parts, located on the bending section 14, of the lower edge of the first half housing and the lower edge of the second half housing towards the symmetric reference plane are overlapped and have a fourth curved profile. As shown in FIG. 1, in some foregoing embodiments, both the third curved profile and the fourth curved profile may be in an arc shape, and the third curved profile and the fourth curved profile are located on concentric circles with different radiuses. Thus, the curvature of the bending section 14 is in smooth transition, and airflow entering from the air inlet 11 can flow smoothly along the bending section 14 of the housing 10, thereby achieving a good flow guide effect.

The guide vanes 90 are connected to the inner wall of the housing 10 located on the bending section 14, and located on the airflow flowing path. Specifically, the guide vane 90 includes a first sub-guide vane 9290 and a second sub-guide vane 9490 which are symmetrically arranged relative to the symmetric reference plane. When the first half housing and the second half housing are adaptively connected, the first sub-guide vane 9290 and the second sub-guide vane 9490 are coupled to form the complete guide vane 90. In a specific embodiment, the first sub-guide vane 9290 and the second sub-guide vane 9490 are both provided with an upper flow guide surface and a lower flow guide surface making contact with airflow, and after the first sub-guide vane 9290 and the second sub-guide vane 9490 are coupled, the corresponding flow guide surfaces of the first sub-guide vane 9290 and the second sub-guide vane 9490 form a smooth curved surface. Of course, in order to make airflow flowing through the guide vanes 90 and the inner wall of the bending section 14 more smooth so as to reduce the noise, in some other embodiments, projections of the guide vanes 90 towards the symmetric reference plane have a fifth curved profile, and the fifth curved profile is of an arc shape. Mid-arc lines equally dividing the third curved profile and the fourth curved profile are perpendicular to and equally divide the fifth curved profile.

The inventors of this application verify through tests that by arranging the guide vanes 90 at the upstream region of the fan 50 close to the air inlet 11, the decibel level of the noise can be reduced by 2 to 3 decibels, the high-pitched noise can be reduced by 2 to 4 decibels, and the air channel efficiency of the air channel portion 12 is reduced by 1% or below.

In one of embodiments, the garden tool 100 with a blowing function further includes a power supply. The power supply is configured for supplying electric power to the motor, which may be a direct-current power supply, or specifically may be a rechargeable battery pack, and the battery pack may be detachably installed on the housing 10. Specifically, the housing 10 is provided with one or two or more battery pack installation portions for combining the battery pack. The battery pack installation portion may be arranged close to an operating handle, and the number of the battery packs is matched with the number of the battery pack installation portions. It is to be understood that the battery pack installation portion is required to be arranged close to the operating handle to allow a weight unit to be as close to a gripping point for operation as possible, thereby reducing the fatigue of the user during work.

The battery pack in one of embodiments can at least supply power to two different types of direct-current tools, for example, it may be suitable for the garden tool 100 with a blowing function, a grass trimmer, a mower, a chain saw, a pruner, an angle grinder, an electric hammer, an electric drill, and other garden tools 100. Accordingly, the user can only purchase a bare garden tool 100 with a blowing function, and supply power to the garden tool 100 with a blowing function by utilizing a battery pack of other existing garden tools 100 to realize energy sharing among multiple tools, which on one hand, benefits the universality of a battery pack platform, and on the other hand, reduces the purchase cost for the user. In a specific embodiment, the battery pack may be fixed to the battery pack installation portion in a snap-fit manner or a plug-in manner. For example, in some embodiments, the battery pack includes slide rail portions (unnumbered) arranged on two sides of the battery pack, a snap-fit portion arranged on an upper side of the battery pack, and a plurality of electrode connecting sheets (not shown in the figure). The slide rail portions may be adaptively connected with the battery pack installation portion to limit the battery pack in the radial direction, and the snap-fit portion is in snap-fit connection with the housing 10 to limit the battery pack in the axial direction, such that the battery pack is stably connected to the battery pack installation portion.

Various technical features of the foregoing embodiments may be combined at will. For brevity of the description, it is unnecessary to describe all possible combinations of the various technical features of the foregoing embodiments, however, the combinations of these technical features should fall within the scope recorded by this specification as long as there is no contradiction.

The foregoing embodiments only show several implementations of the present disclosure, which are specifically described in detail but cannot be understood as limitations on the patent scope of the present disclosure. It should be noted that a plurality of transformations and improvements can also be made by those of ordinary skill in the art without departing from the conception of the present disclosure, which fall within the scope of protection of the present disclosure. Therefore, the scope of protection of the present disclosure should be determined by the claims attached hereto.

In the description of the present disclosure, it is to be understood that orientation or position relationships indicated by terms "center", "longitudinal", "transverse", "length", "width", "thickness","upper", "lower", "front", "rear", "left", "right", "vertical", "horizontal", "top", "bottom", "inner", "outer", "clockwise", "anticlockwise", "axial direction", "radial direction", "circumferential direction", and the like are orientation or position relationships shown based on the drawings, are adopted not to indicate or imply that indicated devices or elements must be in specific orientations or structured and operated in specific orientations but only to conveniently describe the present disclosure and simplify the description, and thus should not be understood as limitations on the present disclosure.

In addition, terms "first" and "second" are used for descriptive purposes only, and cannot be construed as indicating or implying relative importance or implicitly indicating the number of the indicated technical features. Thus, features defined with "first"and "second" may explicitly or implicitly include at least one of the feature. In the description of the disclosure, "a plurality of' means at least two, such as two and three, unless otherwise expressly limited.

In the present disclosure, unless otherwise expressly specified and limited, terms "mounted", "linked", "connected", "fixed", and the like are to be understood in a broad sense, for example, it may be a fixed connection, a detachable connection, or an integrated connection; a mechanical connection, or an electrical connection; a direct connection, an indirect connection through an intermediate medium, an internal communication of two elements, or interaction between two elements, unless otherwise expressly limited. For those of ordinary skill in the art, the specific meanings of the above terms in the present disclosure can be understood according to specific situations.

In the present disclosure, unless otherwise expressly specified and limited, a first feature being "above" or "below" a second feature may be a direct contact between the first feature and the second feature, or an indirect contact between the first feature and the second feature through an intermediate medium. In addition, the first feature is "over", "above", and "on" the second feature may be that the first feature is directly above or diagonally above the second feature, or merely means that the first feature is higher than the second feature in the horizontal height. The first feature is "under", "below", and "underneath" the second feature may be that the first feature is directly below or diagonally below the second feature, or merely means that the first feature is lower than the second feature in the horizontal height.

It should be noted that when an element is "fixed to" or "arranged on" another element, it means that the element may be directly arranged on the another element or there may be an intermediate element. When an element is considered to be "connected to" another element, it means that the element may be directly connected to the another element or there may be an intermediate element at the same time. Terms "perpendicular", "horizontal", "upper", "lower","left", "right", and similar expressions used in the specification are for illustrative purposes only and do not imply an exclusive implementation.

## Claims

1. A garden tool (100) with a blowing function, comprising:
a housing (10), provided with an air inlet (11);
a blowing tube (20), connected with the housing (10), wherein the blowing tube (20) is provided with an air outlet (22) for air to be blown out;
a fan (50), rotating around a fan axis (51), for making air flow and blowing the air out from the air outlet (22); and
a motor, configured for driving the fan (50) to rotate around the fan axis (51);
wherein when the motor operates at a maximum rotational speed, blowing force F and noise LP of the garden tool (100) with a blowing function satisfy following relationships:
16 N≤F≤23 N, and 53 dBA≤LP<57 dBA; or
23 N<F≤40 N, and 53 dBA≤LP<0.0121F²-0.0603F+53.065 dBA.

2. The garden tool (100) with a blowing function according to claim 1, wherein the rotational speed of the motor is 16000 r/min to 26000 r/min.

3. The garden tool (100) with a blowing function according to claim 1, wherein a diameter of a projection profile of the fan (50) in a plane perpendicular to the fan axis (51) is 88 mm to 120 mm.

4. The garden tool (100) with a blowing function according to claim 1, wherein when the motor operates at the maximum rotational speed, the blowing force F and the noise LP of the garden tool (100) with a blowing function satisfy following relationships:
23 N<F≤40 N, and 53 dBA≤LP≤0.0081F²+0.1374F+48.473 dBA.

5. The garden tool (100) with a blowing function according to claim 1, wherein an air volume Q, pressure Pₚᵣₑₛₛᵤᵣₑ, and input power P_{power} of the motor of the garden tool (100) with a blowing function respectively satisfy following relationships:
450 cfm≤Q≤1500 cfm, 1400 Pa≤Pₚᵣₑₛₛᵤᵣₑ≤5000 Pa, and 700 W≤P_{power} ≤3000 W.

6. The garden tool (100) with a blowing function according to claim 1, wherein the garden tool is a blower for blowing leaves on the ground, the blower comprises an air intake shield (60) connected to the air inlet (11), and the fan (50) is configured to rotat around the fan axis (51) and introduce external air through the air intake shield (60); and
the fan (50) comprises:
a hub (52); and
a plurality of fan blades (54) extending outwards from the hub (52) in a radial direction and distributed around the fan axis (51); the fan blade (54) comprises a pressure surface (543) configured for generating airflow, and a suction surface (545), the pressure surface (543) and the suction surface (545) intersect in the direction of the fan axis (51) to form a front edge (546) and a rear edge (548), the front edge is located in front of the rear edge in a rotating direction of the fan,
in the direction of the fan axis (51), a minimum distance between the front edge (546) of the fan blade of the fan (50) and the air intake shield (60) is D5, a length of the garden tool is L0; and
wherein 0.15≤D5:L0≤0.4.

7. The garden tool (100) with a blowing function according to claim 6, wherein the blower further comprises a duct (30) connected with the housing; and
the duct (30) comprises an outer guide cover (32), an inner guide cover (34), and first stationary vanes (36) connected between the outer guide cover (32) and the inner guide cover (34), and the motor is accommodated in the inner guide cover (34); and the air inlet and the outer guide cover (32) are sectioned by a plane perpendicular to the fan axis, and a ratio of a cross sectional area S1 of a section of the air inlet (11) to a cross sectional area S2 of a section of the outer guide cover (32) is 1.6 to 4.

8. The garden tool (100) with a blowing function according to claim 1, wherein the fan (50) comprises:
a hub (52); and a plurality of fan blades (54) extending outwards from the hub (52) in a radial direction and distributed around the fan axis (51);
the fan blade (54) comprises a pressure surface (543) configured for generating airflow, and a suction surface (545), the pressure surface (543) and the suction surface (545) intersect in the direction of the fan axis (51) to form a front edge (546) and a rear edge (548), the front edge is located in front of the rear edge in a rotating direction of the fan, and projections of adjacent front edges and rear edges of two adjacent fan blades do not overlap in a plane perpendicular to the fan axis (51); and
an interval gap is provided between projections of the two adjacent fan blades (54) in the plane perpendicular to the fan axis (51), and the interval gap D0 is greater than 0 mm and less than or equal to 4 mm.

9. The garden tool (100) with a blowing function according to claim 8, wherein the fan axis (51) is defined as an X-axis, a line passing through one end point of the front edge (546) close to the hub (52) and perpendicular to and intersected with the fan axis (51) is defined as a Y-axis, and a line perpendicular to and intersected with the X-axis and the Y-axis is defined as a Z-axis;
a maximum distance between projections of the suction surface (545) and the pressure surface (543) in a plane formed by the X-axis and the Z-axis is defined as a maximum thickness h of the fan blade (54); and
a ratio of a value of the interval gap D0 to a value of the maximum thickness h of the fan blade (50) ranges from 1 to 1.5.

10. The garden tool (100) with a blowing function according to claim 8, wherein the fan blades (54) are formed on the hub (52) through injection molding or die casting.

11. The garden tool (100) with a blowing function according to claim 1, wherein the fan (50) comprises: a hub (52); and
a plurality of fan blades (54) extending outwards from the hub (52) in a radial direction and distributed around the fan axis (51), the fan blade (54) comprises a root portion (542) fixed to the hub (52), a top edge (544) spaced from the hub (52), and a front edge (546) and a rear edge (548) extending between the root portion (542) and the top edge (544), and in a rotating direction of the fan (50), the front edge (546) is located in front of the rear edge (548);
the fan axis (51) is defined as an X-axis, a line passing through one end point of the front edge (546) close to the hub (52) and perpendicular to and intersected with the fan axis (51) is defined as a Y-axis, and a line perpendicular to and intersected with the X-axis and the Y-axis is defined as a Z-axis; and
midpoints of projections of the root portion (542) and the top edge (544) in a plane formed by the X-axis and the Y-axis are correspondingly defined as a first midpoint (5421) and a second midpoint (5441), a line passing through the first midpoint (5421) and parallel to the Y-axis is defined as a first vertical axis (5422), and in an airflow flowing direction, the second midpoint (5441) is located on a downstream side of the first vertical axis (5422) facing the air outlet of the blowing tube (20).

12. The garden tool (100) with a blowing function according to claim 11, wherein an included angle β between a line connecting the first midpoint (5421) and the second midpoint (5441) and the first vertical axis (5422) is 0° to 9°.

13. The garden tool (100) with a blowing function according to claim 11, wherein a projection of the front edge (546) in a plane formed by the Y-axis and the Z-axis is defined as a front side projection (5461), and a line connecting two opposite end points of the front side projection (5461) is defined as a chord line L (5462); and
at least two positions of the front side projection (5461) are respectively located on two opposite sides of the chord line L.

14. The garden tool (100) with a blowing function according to claim 13, wherein the front side projection (5461) at an outer profile of a part of the front edge (546) away from the hub (52) deviates from the chord line L (5462), and the part of the front edge (546) away from the hub (52) is concave away from one side of the blowing tube (20) with the air outlet; and
the front side projection (5461) at an outer profile of a part of the front edge (546) close to the hub (52) deviates from the chord line L (5462), and the part of the front edge (546) close to the hub (52) is convex towards the side of the blowing tube (20) with the air outlet.

15. The garden tool (100) with a blowing function according to claim 13, wherein the front side projection (5461) bends and extends at the outer profile of the part of the front edge (546) away from the hub (52) to form a concave structure (5467) on the front side projection (5461), an opening orientation of the concave structure (5467) is kept consistent with the rotating direction of the fan (50), and a bending angle α between a tangent line, at an intersection point that is of outer profiles of the front edge (546) and the top edge (544) and that is away from the hub (52), of the front side projection (5461), and the chord line L (5462) is 5° to 15°.

16. The garden tool (100) with a blowing function according to claim 11, wherein the projection of the front edge (546) in the plane formed by the X-axis and the Y-axis is located on one side of the Y-axis towards the air outlet of the blowing tube (20), and an included angle θ between the Y-axis and a tangent line, at one end point of the front edge (546) close to the hub (52), of the projection of the front edge (546) in the plane formed by the X-axis and the Y-axis is 3° to 25°.

17. The garden tool (100) with a blowing function according to claim 11, wherein the fan (50) is sectioned by a plane perpendicular to the Y-axis, a line connecting intersection points between the section and the front edge (546) and the rear edge (548) is defined as an installation line (547), and an installation included angle γ between the installation line (547) and the X-axis is gradually increased from the root portion (542) to the top edge (544).

18. The garden tool (100) with a blowing function according to claim 11, wherein the fan blade (54) further comprises a curved surface transition portion (541) located at a junction of the rear edge (548) and the top edge (544) and approaching the hub (52) from the top edge (544), an arc surface of the curved surface transition portion (541) is convex away from the hub (52), and a corner radius of a projection of the curved surface transition portion (541) in the plane formed by the X-axis and the Y-axis is 1 mm to 5 mm.

19. The garden tool (100) with a blowing function according to claim 1, wherein the garden tool (100) with a blowing function further comprises: a duct (30) connected with the housing; the duct (30) comprises an outer guide cover (32), an inner guide cover (34), and first stationary vanes (36) connected between the outer guide cover (32) and the inner guide cover (34);
the first stationary vane (36) comprises a bottom (362) connected to the inner guide cover (34), a top (364) connected to the outer guide cover (32), and a first front side edge (366) and a first rear side edge (368) located in an airflow flowing direction in a spaced manner;
the fan axis (51) is defined as an X-axis, and a plane passing through any point on the fan (50) and perpendicular to the X-axis is defined as a reference plane (53); and
a distance between one end point of the first front side edge (366) close to the bottom (362) and the reference plane (53) is less than a distance between one end point of the first front side edge (366) close to the top (364) and the reference plane (53).

20. The garden tool (100) with a blowing function according to claim 19, wherein a distance between one end point of the first rear side edge (368) close to the bottom (362) and the reference plane (53) is less than a distance between one end point of the first rear side edge (368) close to the top (364) and the reference plane (53).

21. The garden tool (100) with a blowing function according to claim 19, wherein an axis of the inner guide cover (34) is defined as an X'-axis, a line passing through the end point of the first front side edge (366) close to the bottom (362) and perpendicular to and intersected with the X'-axis is defined as a Y'-axis, and a line perpendicular to and intersected with the X'-axis and the Y'-axis is defined as a Z'-axis;
a part, close to the fan (50), of a stationary vane section (31) obtained by sectioning the first stationary vane (36) by a surface parallel to a plane formed by the X'-axis and the Z'-axis, crosses the X'-axis, and bends and extends in a circumferential direction of the inner guide cover, and
a maximum height, in the direction of the Z'-axis, of the stationary vane section (31) obtained by sectioning the first stationary vane (36) by the surface parallel to the plane formed by the X'-axis and the Z'-axis is defined as a bending distance D4 of the first stationary vane (36); and the bending distance D4 of the first stationary vane (36) is gradually increased from the bottom (362) to the top (364).

22. The garden tool (100) with a blowing function according to claim 21, wherein the first stationary vane (36) has a windward side and a leeward side opposite to the windward side, outer profiles of projections of the windward side and the leeward side in the plane formed by the X'-axis and the Z'-axis intersect, and an included angle between a tangent line at one intersection point close to the fan (50) and the X'-axis is defined as a first stationary vane inlet angle Le, and the first stationary vane inlet angle Le is 35° to 65°.

23. The garden tool (100) with a blowing function according to claim 19, wherein a length of the first stationary vane (36) is L1, a mid-arc line chord length of the fan blade (54) of the fan (50) is L2; wherein 3≤L1:L2≤9; and
the length of the first stationary vane (36) is defined as a distance between the first front side edge (366) of the first stationary vane (36) and the first rear side edge (368) of the first stationary vane (36) in the airflow flowing direction.

24. The garden tool (100) with a blowing function according to claim 19, wherein the garden tool (100) further comprises a guide cone (38) connected to the inner guide cover (34), and second stationary vanes (39) arranged on the guide cone (38); and
the second stationary vanes (39) are located downstream of the first stationary vanes (36) in the airflow flowing direction.

25. The garden tool (100) with a blowing function according to claim 24, wherein a length of the second stationary vane (39) is L3, a chord length of the first stationary vane (36) is L4; wherein 0.2≤L3:L4≤1; and
the length of the second stationary vane (39) is defined as a size of the second stationary vane (39) in the airflow flowing direction.

26. The garden tool (100) with a blowing function according to claim 1, wherein the garden tool further comprises an air intake shield (60) connected to the air inlet, and the fan (50) is configured to rotate around the fan axis (51) and introduce external air from the air inlet through the air intake shield (60); and the air intake shield (60) comprises a three-dimensional air inlet array grid with an outward convex outer envelope surface, and the three-dimensional air inlet array grid comprises:
a web (61) extending in a first direction (612), wherein there are a plurality of webs (61), and the plurality of webs (61) are arranged in a second direction (661) at intervals; and
a flow-breaking rib (66) extending in the second direction (661), wherein there are a plurality of flow-breaking ribs, each flow-breaking rib (66) is in lap joint to two adjacent webs (61) in the second direction (661), a plurality of grid units (62) arranged at intervals are defined by the plurality of flow-breaking ribs (66) and the plurality of webs (61), and air inlet holes (621) for airflow to penetrate through are formed between adjacent grid units (62);
ejection portions (68) of the plurality of flow-breaking ribs (66) protrude relative to the webs (61) in a direction away from the air inlet to form the outward convex outer envelope surface of the three-dimensional air inlet array grid, and
wherein the first direction (612) intersects with the second direction (661).

27. The garden tool (100) with a blowing function according to claim 26, wherein the plurality of grid units (62) are arranged into a plurality of rows at intervals in the second direction (661), and the grid units (62) in each row are arranged in the first direction (612); and
the two most adjacent grid units (62) in adjacent rows are staggered in the first direction (612).

28. The garden tool (100) with a blowing function according to claim 27, wherein two adjacent flow-breaking ribs (66) in adjacent rows are staggered at equal intervals in the first direction (612).

29. The garden tool (100) with a blowing function according to claim 26, wherein the flow-breaking rib (66) comprises a first air guide portion (681) and a second air guide portion (682), wherein the first air guide portion (681) and the second air guide portion (682) extend towards the adjacent spaced webs (61) from the ejection portion (68); the flow-breaking rib (66) has a windward side (65) and a leeward side opposite to the windward side (65); and
a preset distance D6 of the leeward side of the ejection portion (68) protruding outward relative to the web (61) is 2 mm to 20 mm.

30. The garden tool (100) with a blowing function according to claim 26, wherein the air intake shield (60) further comprises a frame (64) connected to the air inlet, and the frame (64) surrounds outside the three-dimensional air inlet array grid.
